# EUROPEAN PATENT APPLICATION

(11) **EP 4 095 782 A1**
(43) Date of publication of application: **30.11.2022**
(21) Application number: 21461546.0
(22) Date of filing: 27.05.2021
(51) Int. Cl.: G06Q 20/10, G06Q 20/16, G06Q 20/18, G06Q 20/08, G06Q 20/22

(54) **ELECTRONIC REMUNERATION DISBURSEMENT SYSTEM**

(71) Applicant: Billon Sp. z o.o., 00-021 Warszawa (PL)
(72) Inventor: HOROSZCZAK, Andrzej, Warszawa (PL); OBIDOWSKI, Piotr, Warszawa (PL); NIEMOJEWSKI, Mateusz, Warszawa (PL); PUTTS, David, Warszawa (PL)
(74) Representative: Kancelaria Eupatent.pl Sp. z.o.o

(57) **Abstract**

A method of a payer disbursing electronic remuneration payouts to recipients, comprising the steps of: receiving, from a payer device, disbursement data comprising a recipient disbursement amount and recipient contact information including a contact method and a contact point, at a disbursement management module; receiving, at the disbursement management module, a request from the payer to enable a set of disbursements as available disbursements; transmitting a notification of the available disbursement to the recipient contact point according to the contact method specified for the available disbursement; receiving, from the recipient device, of all required personal data; enabling the recipient to collect the available disbursement through the recipient device.

## Description

### COPYRIGHT NOTICE

A portion of the disclosure of this patent document contains material to which a claim for copyright is made. The copyright owner has no objection to the facsimile reproduction by anyone of the patent document or the patent disclosure, as it appears in the Patent and Trademark Office patent file or records, but reserves all other copyright rights whatsoever.

### FIELD OF THE INVENTION

The technology relates to the field of electronic remuneration disbursement and collection software and has certain specific application as software-as-a-service.

### BACKGROUND

Currently, payers face high costs relative to the administration of disbursements. These costs are typically related to the entry of recipient contact and payment information. To limit these costs the payer offers less flexible disbursement options to the recipient with regards to the timing and method by which the recipient may collect payments. Particularly for small payers and those with indirect or transient workers, it would be highly desirable to minimize the manual entry of recipient information, while allowing for the maximum convenience and flexibility for those recipients to receive their disbursement. Further, payers must notify recipients of the availability of payments which may be an additional cumbersome and costly process. Current recipient disbursement collection options involve receiving paper coupons or vouchers which may only be redeemed at specific locations, making an electronic system of disbursement and collection more convenient, safer, and desirable.

### BRIEF SUMMARY OF THE INVENTION

The present disclosure provides a description of systems and methods for an electronic disbursement system used to pay remuneration (such as salary or incentives) to recipients (such as direct or indirect recipients or others) by payers (such as employers).

There is disclosed a method of a payer disbursing electronic remuneration payouts to recipients, comprising the steps of:
- receiving, from a payer device, disbursement data comprising a recipient disbursement amount and recipient contact information including a contact method and a contact point, at a disbursement management module;
- receiving, at the disbursement management module, a request from the payer to enable a set of disbursements as available disbursements;
- transmitting a notification of the available disbursement to the recipient contact point according to the contact method specified for the available disbursement;
- receiving, from the recipient device, of all required personal data; and
- enabling the recipient to collect the available disbursement through the recipient device.

The method may comprise enabling the user for redemption, through automated or electronic methods running in an application or a website on the recipient device, of the collected disbursements and convert the collected disbursements into physical cash, transfers, or bank deposits.

The method may comprise automated reporting of personal data submitted by the recipient through the recipient device to the payer management module in order to comply with legal requirements.

The method may comprise enabling for the recipient an on-demand automated electronic collection of disbursement through an electronic request mechanism.

The method may comprise enabling for the recipient an on-demand redemption of funds and conversion into physical cash, transfers, or bank deposits through electronic methods.

The method may comprise enabling for the recipient a redemption of collected disbursements through ATM networks.

The method may comprise enabling for the recipient a redemption of collected disbursements through bank transfers.

The method may comprise enabling for the recipient a redemption of collected disbursements through retailer cash out codes.

The method may comprise enabling for the recipient a redemption of collected disbursements through telecommunications account "top-up".

The method may comprise enabling for the recipient a redemption of collected disbursements through Peer-To-Peer transfer.

There is also disclosed a computer system comprising: at least one nontransitory processor-readable storage medium that stores at least one of processor-executable instructions or data; and at least one processor communicably coupled to the at least one nontransitory processor-readable storage medium, wherein the at least one processor is configured to perform the steps of the method as described herein.

There is also disclosed a computer program product comprising instructions which, when executed on a computer, cause the computer to perform the steps of the method as described herein.

In some embodiments, an example method includes: entering personal recipient details and payment information by the recipient via a recipient device, such as a desktop computer or a mobile phone. Selection, by the recipient of the collection method by which they receive their disbursement. In the preferred embodiment recipients are not required to have a bank account or software user account to collect electronic disbursements. Notification, through automated means, may be sent to recipients upon availability of their disbursement though an electronic communication via their recipient contact information or an installed application.

Collection, by recipients, of available disbursements via the website, or an application running on a recipient device (such as a mobile phone, desktop computer or similar processing device). Redemption of collected funds as physical cash via a variety of methods, or electronic transferal of disbursement funds into bank accounts, electronic wallets, or other funds or accounts. This disbursement method eliminates many costly administrative tasks performed by the payer and provides flexible, convenient, and fast collection options to the recipient that are immediately convertible into physical cash.

In further embodiments, a system for entering and managing recipient personal data includes: a payer device, a web page or application, and software to manage, store, and communicate recipient data; a recipient device, a web page, and software to manage, store, and communicate recipient data.

In further embodiments, a system for entering and managing recipient disbursement data includes: a payer device, a web page or application, software to manage, store, and communicate recipient disbursement data, an e-money issuance and redemption platform, a bank or financial institution or another Peer To Peer (P2P) account.

In further embodiments, a system for collecting recipient disbursements funds includes: a recipient device, a web page or application, software to manage, store, and communicate recipient disbursement data, and an e-money issuance and redemption platform.

In further embodiments, a system for redeeming collected recipient disbursements includes: a recipient device, a web page or application, software to manage, store, and communicate recipient disbursement data, an e-money issuance and redemption platform, a bank or financial institution, or a retailer, or an ATM, or a telephone provider, or another Peer To Peer account.

### BRIEF DESCRIPTION OF THE DRAWINGS

Embodiments of the present disclosure are best understood from the following detailed description of exemplary embodiments when read in conjunction with the accompanying drawings. Included in the drawings are the following Figures:
Fig. 1 illustrates an example method of a payer disbursing funds to recipients, the electronic notification of funds, the entry of required personal data, the on-demand collection, and the redemption of disbursements by recipients via an electronic remuneration disbursement system according to various embodiments described herein.
Fig. 2 illustrates an example of a high-level view of a system architecture for an electronic remuneration disbursement method in an exemplary embodiment of the invention according to various embodiments described herein.
Fig. 3 illustrates an example method by which a payer creates and manages a list of recipient disbursements in an exemplary embodiment in greater detail as initially shown in item 100 (Fig. 1) according to various embodiments described herein.
Fig. 4 illustrates an example method for a system which notifies the recipient of a disbursement security code as initially described in item 101 (Fig. 1).
Fig. 5 illustrates an example method for the recipient entering their disbursement security code as initially described in item 102 (Fig. 1) according to various embodiments described herein.
Fig. 6 illustrates an example method for the recipient to download and install an application, and register an account as initially described in item 105 (Fig. 1) according to various embodiments described herein.
Fig. 7 illustrates an example method for the recipient to submit and save their personal data as initially described in item 107 (Fig. 1) according to various embodiments described herein.
Fig. 8 illustrates an example method for the recipient to request collection of disbursed funds and transfer said funds via an application as initially described in item 109 (Fig. 1) according to various embodiments described herein.
Fig. 9 illustrates in greater detail an example method for the recipient to choose one or more redemption options via an application as initially described in item 110 (Fig. 1) according to various embodiments described herein.
Fig. 10 illustrates in greater detail an example method for the recipient receiving a cash out code for a retailer cash out redemption via the application as initially described in item 921 (Fig. 9) according to various embodiments described herein.
Fig. 11 illustrates in greater detail an example method for the recipient redeeming their cash out code at the retailer via the application as initially described in item 922 (Fig. 9) according to various embodiments described herein.
Fig. 12 illustrates in greater detail an example method for the recipient to redeem funds via an ATM by receiving a cash out code from an application as initially described in item 903 (Fig. 9) according to various embodiments described herein.
Fig. 13 illustrates in greater detail an example method for the recipient to enter their application-issued cardless cash out code into an ATM to redeem funds as initially described in item 904 (Fig. 9) according to various embodiments described herein.
Fig. 14 illustrates an example method for the recipient to collect and transfer funds via a website as initially described in item 113 (Fig. 1) according to various embodiments described herein.
Fig. 15 illustrates an example method for the recipient to choose a form of redemption and associated actions via a website as initially described in item 114 (Fig. 1) according to various embodiments described herein.
Fig. 16 illustrates in greater detail an example method for the recipient to redeem funds via an ATM by receiving a cash out code from a website as initially described in item 1503 (Fig. 15) according to various embodiments described herein.
Fig. 17 illustrates in greater detail an example method for the recipient to enter their websiteissued cardless cash out code into an ATM to redeem funds as initially described in item 1504 (Fig. 15) according to various embodiments described herein.
Fig. 18 illustrates in greater detail an example method for the recipient to receive a cash out code for the retailer cash out redemption choice via the website as initially described in item 1521 (Fig. 15) according to various embodiments described herein.
Fig. 19 illustrates in greater detail an example method for the recipient redeeming their cash out code at the retailer via the application as initially described in item 1522 (Fig. 15) according to various embodiments described herein.
Fig. 20 is an example of an instance of a preferred embodiment of the disbursement management page 203 functioning as an User Interface for payers to manage lists of recipient disbursements according to various embodiments described herein.
Fig. 21 is an example of an instance of a preferred embodiment of the collection page 204 functioning as a User Interface for recipients to collect their disbursement according to various embodiments described herein.
Fig. 22 illustrates an example of a high-level system architecture for a computer or similar processing and display device according to various embodiments described herein.

### DETAILED DESCRIPTION

Reference will now be made in detail to the embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well known methods, procedures, and components have not been described in detail as not to unnecessarily obscure aspects of the present invention.

### Glossary of Terms

**Network.** The network enables communication between system components. The network may be any network suitable for performing the functions as disclosed herein and may include a local area network (LAN), a wide area network (WAN), a wireless network (e.g., Wi-Fi), a mobile communication network, a satellite network, the Internet, fiber optic, coaxial cable, infrared, radio frequency (RF), or any combination thereof. Other suitable network types and configurations will be apparent to persons having skill in the relevant art. The network may use communication protocols including Transmission Control Protocol (TCP) or User Datagram Protocol (UDP), proprietary protocols, the like, or any combination thereof. The preferred embodiment has security features applied to the network, including but not limited to secure or cryptographic protocols such as Transport Layer Security (TLS), Secure Sockets Layer (SSL), Hypertext Transfer Protocol (HTTP) Secure (HTTPS), and the like. Further, the preferred embodiment applies additional pointto-point security schemes such as Virtual Private Networks (VPN) to create secure virtual tunnels to transmit data across security, physical, geographic, or topological barriers.

Web Browser. Representative Web Browsers include, among others, Microsoft Edge, Google Chrome, Mozilla Firefox, Apple Safari, Samsung Internet or the like, each of which are downloadable software programs. These software programs are able to connect, retrieve, and display web pages hosted on a Web server and run certain client-side scripting languages that can dynamically logical functionality.

**Web server.** The web server hosts formatted image, text, files, objects, and scripting logic, at least some of which that may define websites. Representative web server software includes, among others, Apache HTTP Server (all versions), Apache Tomcat (all versions), Microsoft IIS (all versions), or the like, each of which are downloadable software programs. In the website Internet paradigm, a network path to a server is identified by a so-called Uniform Resource Locator (URL). The World Wide Web (www) is the Internet's multimedia information retrieval system. In particular, it is a collection of web servers of the Internet that use the Hypertext Transfer Protocol (HTTP) and derivatives, which provides user access to formatted files using languages such as Hypertext Markup Language (HTML), Cascading Style Sheets (CSS), and the like, as well as client-side scripting languages such as JavaScript and the like. Web servers also can present or manage data through server-side scripting languages such as PHP, Perl, ASP, and the like.

### DETAILED DESCRIPTION OF EMBODIMENTS

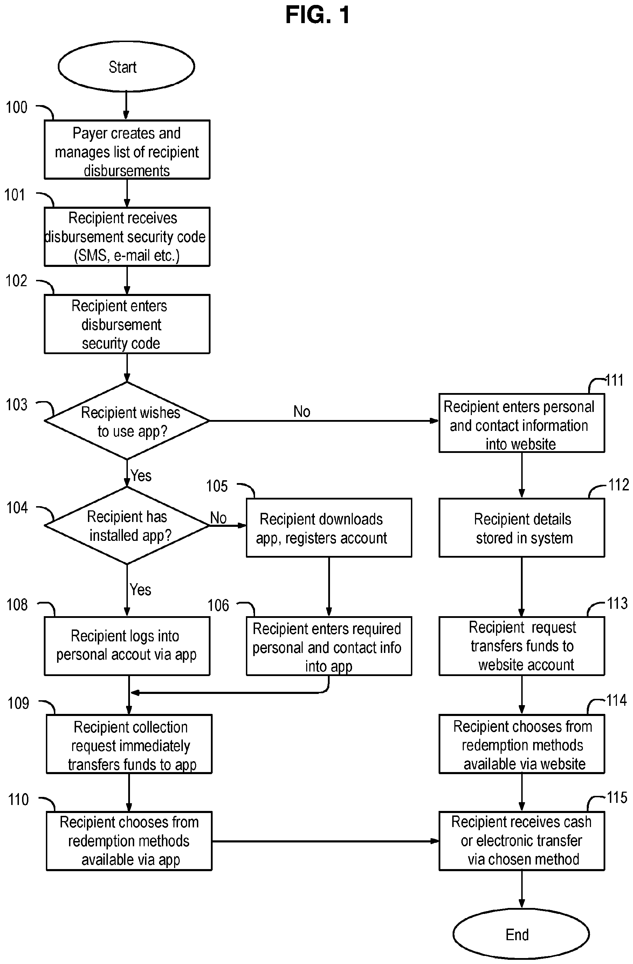

Fig. 1 illustrates an example method of the preferred embodiment of the invention where a payer may disburse electronic funds to recipients. In step 100, the disbursement process may be initiated when the payer uploads a disbursement list to the system website. The disbursement list associates recipients with their disbursement amounts and their recipient contact information. The recipient contact information includes a contact method (such as e.g. telephone, email, post, messaging app) and a contact point (such as a telephone number, email address, postal address, messaging app identifier). In preferred embodiments, the payer may enable one or more disbursements to specific recipients or groups of recipients.

When a recipient disbursement is activated, a notice of the disbursement availability may be sent to the given recipient contact information in step 101. In preferred embodiments, this may be an automatic electronic notice (for example SMS, email, instant messenger, P2P message and the like) sent over a communications network 207. Said disbursement notice contains a code that has been uniquely generated by the disbursement module 209 for this user. The disbursement module 209 provides disbursement module.

Upon receiving such notice, the recipient may click on the provided collection website link, where the underlying communication technology supports URL linking, or go to the collection website via a web browser. On the website, the recipient may confirm their identity by typing in the provided code, step 102.

Step 103 is a conditional choice made by the recipient and based upon their preference of using an application (mobile app, desktop, or on a like computing device) to collect their disbursement, or a website.

Step 104 introduces a second conditional, which chooses a workflow path based upon whether the recipient has already installed the application on their device or not. In the event the recipient has already installed the application, the workflow proceeds to step 108.

Step 108 may occur in the event the recipient has already the application 208 installed and they have registered an account. In preferred embodiments, the recipient logs into the application 208 by providing their username and password. Alternative verification may be used, including biometric verification (iris, facial, voice, or fingerprint recognition, and the like), personal identification number (PIN), physical authenticator or security token devices, or 2-factor authentication on this or other devices or some combination thereof.

Step 105 occurs in the event the recipient has not installed the application 208 on the device. The recipient may download the application 208 through direct URL links or an "app store". These links may be provided through the method indicated by the recipient's information method. In preferred embodiments, these links may be clickable and include recipient-specific parameter data provided by the payer to transfer information into the auto-launched application 208 and reduce the amount of data manually entered by the recipient. Alternative embodiments may use manual entry due to technical limitations of the contact methods or due to data privacy reasons.

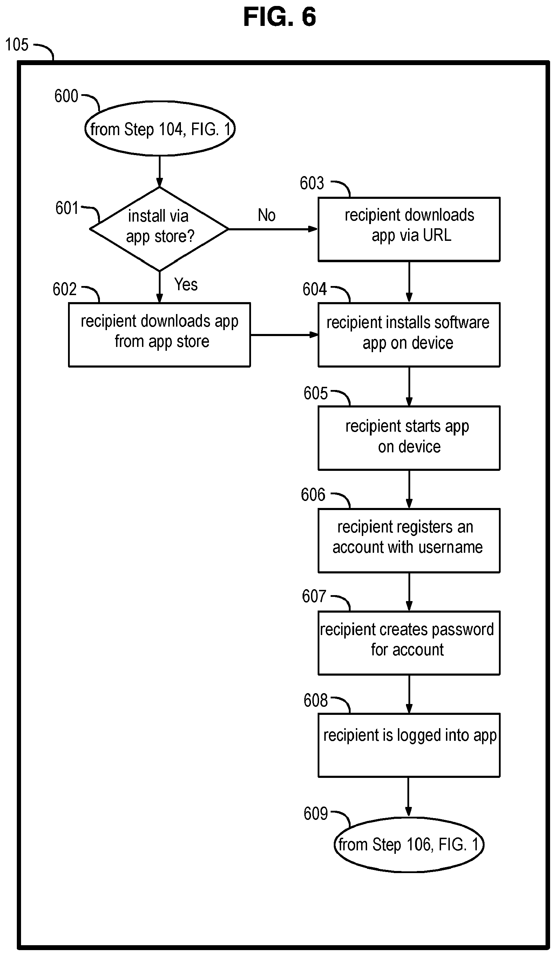

Also in step 105, the recipient registers a new account if the event they do not already have one and log into this new account. Should the recipient already have an account they log into it in this step. The individual steps comprising step 105 are presented in greater detail in Fig. 6.

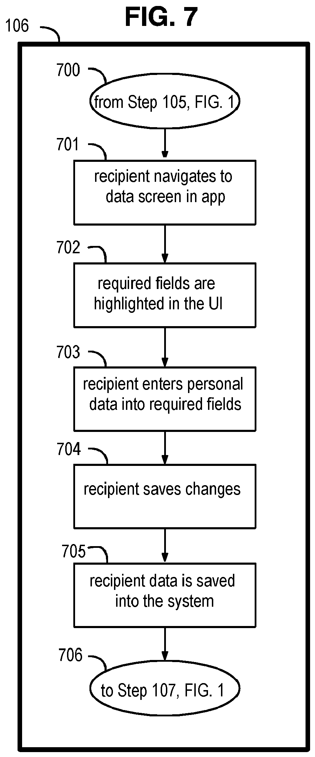

The recipient may enter the required personal data in step 106. Any fields required by their payer and the governing legal authority may be entered into the application 208 in this step. Details such as address, government id number, telephone, email, and the like may be entered by the user. Having the recipient enter these details saves the payer manual entry and administrative overhead, and reduces typographical errors as the recipient is intimately familiar with their own personal data. The individual steps comprising step 106 are presented in greater detail in Fig. 7.

The data entered by the recipient in step 106 may be saved into the system. In preferred embodiments, this data may be encrypted and securely saved to the recipient device 205. Further in the preferred embodiment the encrypted data may be securely replicated to one or more system servers, subject to data privacy laws. The persisted data may be saved into a distributed or relational database or stored in structured files on one or more physical or virtual servers or disk volumes. The required recipient information may be readable by the payer through the disbursement management page 203 so it may be in turn reported to tax agencies and other governmental entities.

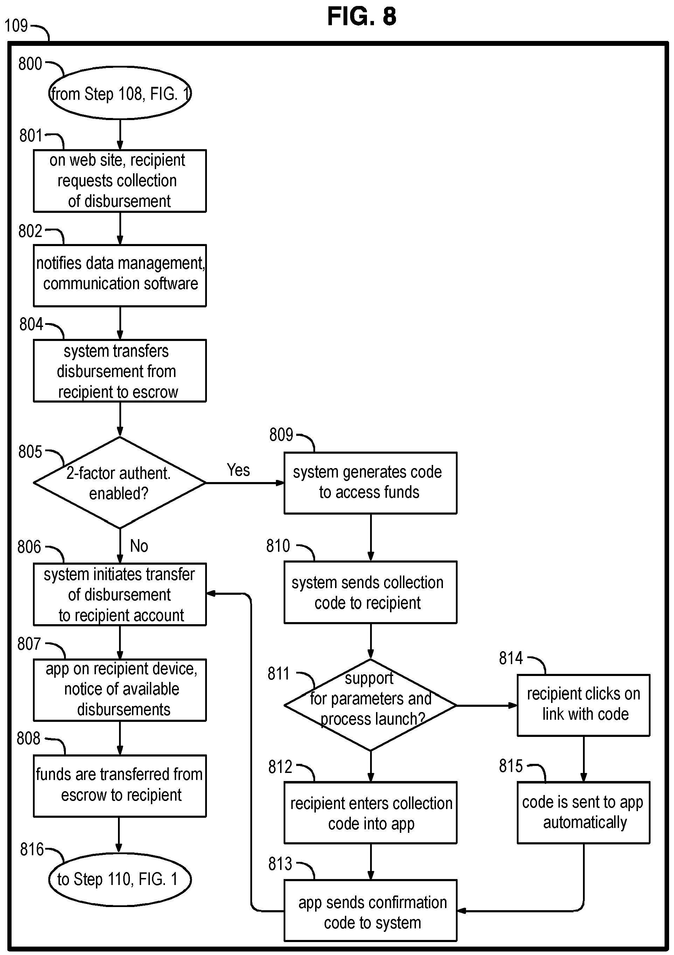

Step 109 occurs after the recipient has registered their information for the first time or the recipient has subsequently logged into the application. In step 109 the recipient uses the application 208 to collect their disbursement from the website. In preferred embodiments, this invokes the immediate movement of funds from the payer's account to the recipients. Such transfer may be only allowed after the recipient's required personal data have been satisfactorily entered. The individual steps comprising step 109 are presented in greater detail in Fig. 8.

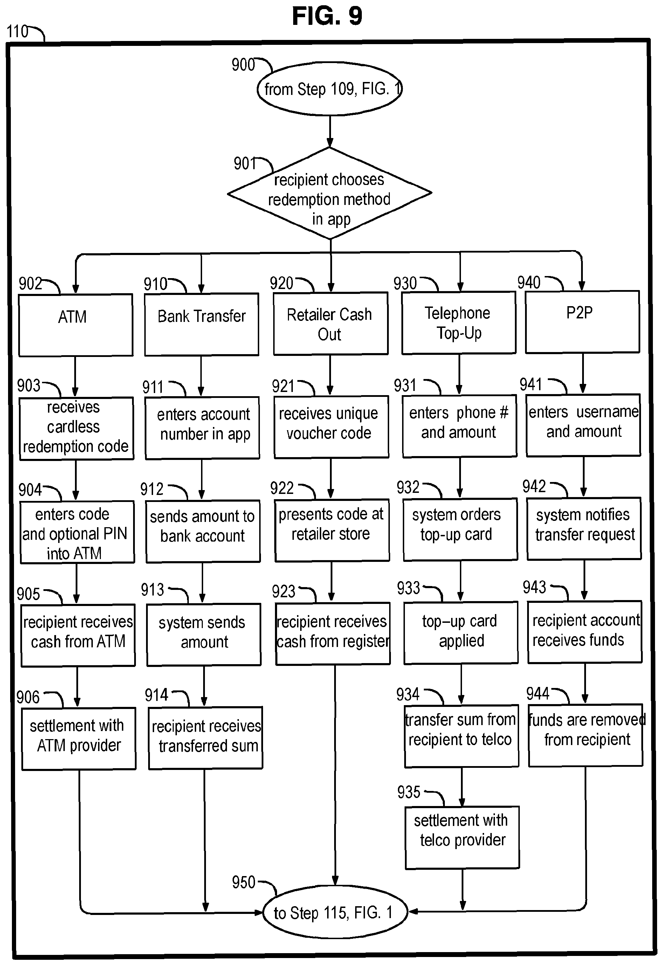

In step 110, the recipient chooses a redemption method from those available to recipients using the application 208. After a successful redemption, the recipient may receive their disbursement funds in step 115. The redemption process requires the coordination of the disbursement system and the funds managed therein with external financial parties. The individual steps comprising the example redemption methods in step 110 are presented in greater detail in Fig. 9.

Returning to the conditional 103. In the event the recipient chooses not to use the application for collection, they may enter their personal data directly on the collection website in step 111.

The web server 202 saves into the disbursement module 209 the recipient's personal data entered into the collection page 204 in step 112. In preferred embodiments, the data may be encrypted and securely saved to local storage web server storage or one or more remote locations subject to data privacy laws. The persisted data may be saved into a distributed or relational database or stored in structured files on one or more physical or virtual servers or disk.

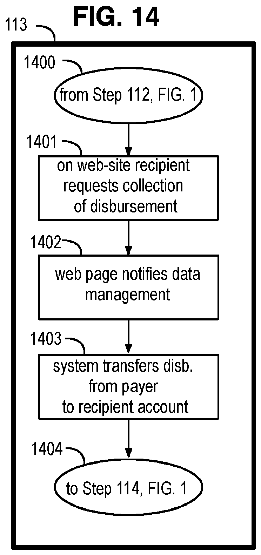

In step 113, the recipient requests collection of their disbursement. In preferred embodiments, funds are immediately transferred into their account on the website that may be associated with the initial security code. Alternative embodiments may slower transfer methods due to cost or technical limitations, or deliberately delay the transferal or use intermediate accounts if required. The individual steps comprising an example collection method in step 113 are presented in greater detail in Fig. 14.

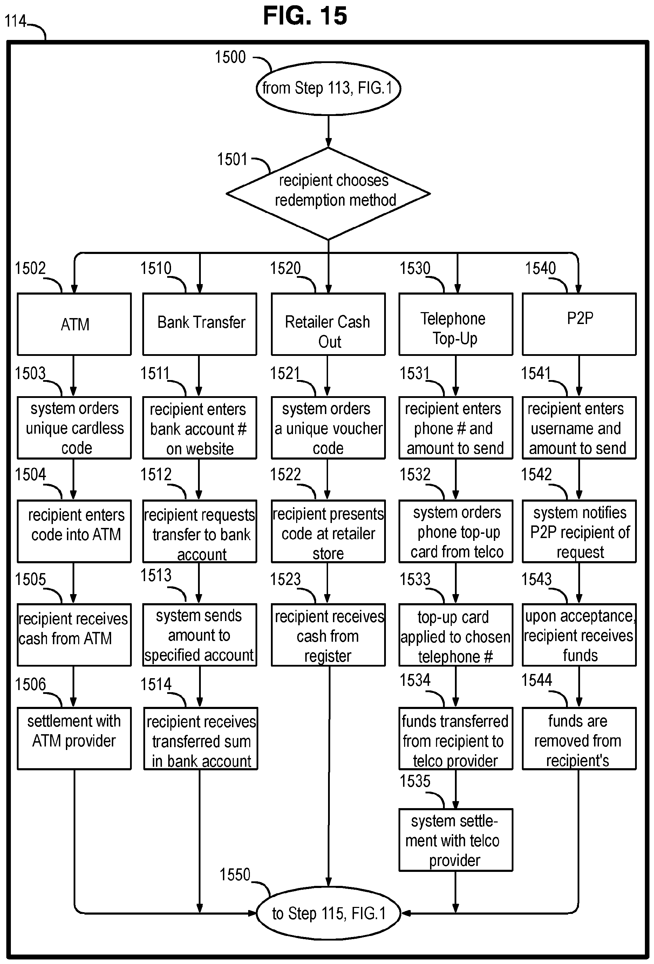

In step 114, the recipient chooses from the available redemption methods via website collection. The redemption methods offered may vary based on economic costs, regulatory and technology factors. Preferred embodiments may include several redemption methods to provide the greatest convenience and flexibility for the recipient. The redemption process may require the coordination of the disbursement system and the funds managed therein with external financial parties. The individual steps comprising the example redemption methods in step 114 are presented in greater detail in Fig. 15.

In step 115 the recipient receives the disbursement funds as physical moneys or transferred electronic funds deposited into the indicated account.

In further embodiments, a method of a payer disbursing electronic remuneration payouts to recipients may comprise the steps of: submitting, by a payer on a payer device (such as a desktop computer, a mobile device or the like), the recipient disbursement amount and recipient contact information to disbursement management module running on a computer system; enabling, by a payer on the payer device, a set of disbursements, as available disbursements; transmitting notification of available disbursements to the specified recipient contact mobile device, computer system, or the like according to the contact method; submission, by the recipient, of all required personal data through an application or website running on a recipient device (such as a desktop computer or a mobile device); collection by the recipient of available disbursements through an application or web site running on the recipient device; redemption, through automated or electronic methods running in an application or a website on the recipient device, of collected disbursements from the application or website, converting collected funds into physical cash, transfers, or bank deposits.

In still further embodiments, the method may further comprise automated reporting of personal data submitted by the recipient through the application or website, available to the payer management module running on a computer system to comply with legal requirements

In still further embodiments, the method may further comprise on-demand automated electronic collection of disbursement by the recipient through an electronic request mechanism.

In still further embodiments, the method may further comprise on-demand redemption of funds and conversion into physical cash, transfers, or bank deposits through electronic methods.

In still further embodiments, the method may further comprise redemption of collected disbursements through ATM networks.

In still further embodiments, the method may further comprise redemption of collected disbursements through bank transfers.

In still further embodiments, the method may further comprise redemption of collected disbursements through retailer cash out codes

In still further embodiments, the method may further comprise redemption of collected disbursements through telecommunications account "top-up".

In still further embodiments, the method may further comprise redemption of collected disbursements through Peer-To-Peer transfer.

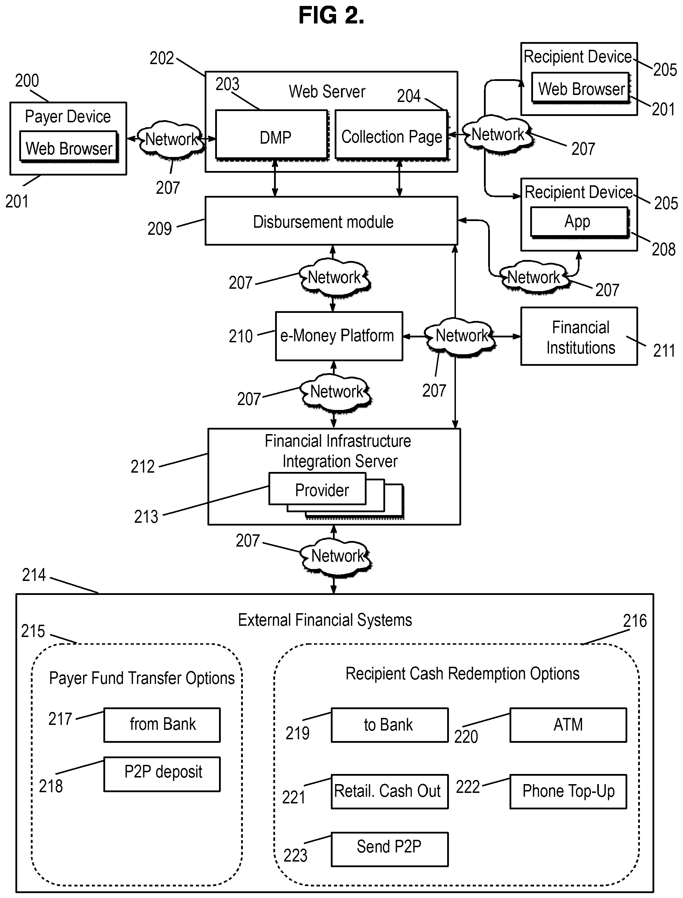

Fig 2. illustrates an exemplary system used by payers to disburse payments and notify the recipient of the availability of funds. Further, this exemplary system enables the recipient to enter personal data, reducing the administration required by the payer. Further still, this exemplary system enables the recipient to collect available disbursement funds electronically, and redeem said funds through various methods. The payer's device 200 is connected to a web server 202 via communication network 207. By way of example only, a payer device 200 may be a computer, tablet, mobile phone, or another processing-capable device. For illustrative purposes, the network 207 is the Internet, an Intranet or other known connection. In the case of the Internet, the web server 202 is a singular or plurality of physical or virtual servers which are accessible to one or more payer devices, one of which is illustrated by device 200. A payer device includes a web browser 201 to access the web server via the network 207.

The web server 202 may function as a hosting point for disbursement operations. The web server 202 may host the disbursement management page 203 and the collection page 204 as web pages, providing a user interface to payers and recipients for disbursement management and collection respectively. The web server may communicate information with the various payer devices 200 and recipient devices 205, performing in conjunction with the disbursement module 209, disbursement data management, access, transfer, and validation. The payer device 200 and recipient device 205 may communicate with web server 202 via the communications protocols of the network 207 (e.g., HTML, PPP, XSL, etc.). Web server 202 may present recipient information, account usernames, disbursement amounts, disbursement availability, collection status, collection restrictions, and the like, via data managed and stored in the disbursement module 209.

Web server 202 may host disbursement panel operations for payers by, for example, allowing payers to upload lists of recipient information, activating and deactivating disbursements for individual or sets of recipients from said lists, managing the timed availability of disbursements to list members, reporting the status of individual and aggregate recipient collections and other metrics.

Web server 202 may host disbursement panel operations for recipients by, for example, providing secure SMS codes upon demand to confirm identity, validation of said SMS codes, providing cardless-ATM or other cash out collection codes for those users who do not wish to register an account, directing first time users who wish to register through the account registration process, providing application download links, and enabling the confirmed association between user account and telephone number to shorten the number of steps in the collection process.

The web browser 201 may display the disbursement management page 203 to the payer. Said web page 203 enables the payer to upload and manage lists of disbursements to recipients. Disbursement management page 203 may be implemented as a single HTML or CSS web page or via multiple web pages that constitute a management function. Disbursement lists managed from the disbursement management page 203 may recipient enable access to funds. Further, said lists may associate the currency and amount of funds available to disburse to each recipient. Recipients may be assigned disbursements on one or more separate lists. The management tools presented on web page 203 define a User Interface (UI) for the payer.

The recipient device 205 is connected to a web server 202 via communication network 207. By way of example only, a recipient device 205 may be a computer, tablet, mobile phone, or another processing-capable device. The recipient may optionally use a device 205 that includes a web browser 201 to access the Collection Page 204.

The web browser 201 may display the collection page 204 to the recipient. Said web page 204 enables recipients to submit or upload personal data, confirm their identity, claim their disbursement(s), "pull" or request their disbursement, choose and execute a disbursement collection option, and similar disbursement fund and account setting options. Collection page 204 may be implemented as a single HTML or CSS web page or via multiple web pages that constitute a collection function. Recipients may claim and collect one or more available disbursements at the same time. Recipients may choose some of the available Recipient Cash Redemption Options 213 from Collection Page 204. The data entry, disbursement request, claim, and collection tools presented on web page 204 define a User Interface (UI) for the recipient.

Recipient device 205 may optionally use an installed software application 208 (depending on device context optionally called a "program", "application", or "app") to access the collection page 204. Application 208 may be made available through mobile application "stores" such as Google Play and the Apple Store, or direct download URLs. Application 208 may itself host the collection page 204 in an embedded web browser, or display the provided data in another UI format. Further, application 208 may offer more direct integration with the disbursement module 209. Said direct integration functionality may include, but is not limited to, confirming the association between username and telephone number, "pull" requests to claim or collect disbursements, the actual receipt of disbursements, and may confirm the recipient cash redemption options 213.

Disbursement management page 203 and collection page 204 may communicate, through the protocols available to web server 202, with the disbursement module 209. The disbursement module 209 provides additional communication, data processing, and data management logic for both payers and recipients, including, but not limited to, payer and recipient information handling, user account management, data encryption and decryption services, data storage, data replication, data validation, data signing, as well as higher level system functionalities such as disbursement enablement, disbursement transfer, disbursement assignment, disbursement push and pull requests, disbursement availability notifications, user and password authentication. The disbursement module 209 system may be hosted on an application server or as a standalone process, on the same physical or virtual server as the web server 202, or on a different physical or virtual server. The disbursement module 209 may have its component programmatic logic located in a single process on a server or located in multiple server or client locations including on the recipient and payer devices. In embodiments utilizing multiple instances of disbursement module 209 the instances may coordinate and communicate through established protocols. Further, the computer system upon which 209 is deployed may be "clustered" with other servers for high availability, load balancing, backup, and failover operational modes.

The disbursement module 209 may store data in various locations, including, but not limited to, in memory, either volatile or non-volatile, on disc volumes such as Hard Disk Drives (HDD), solid state storage, or removable media such as Secure Digital (SD) memory cards, clouds, remote drives, and other forms of direct or indirect storage. The disbursement module 209 may store formatted data such as in a relational or object-oriented Database system, exemplified by software such as Oracle Database, Microsoft SQL Server, MySQL and the like. Further disbursement modules 209 may store data in a distributed format that spans multiple memory and disc volumes or in any combination of the above. The disbursement module 209 may communicate via network 207 with the e-Money issuance and redemption platform 210, the application 208 running on the recipient device 205, and the financial infrastructure integration server 212. To optimize system speed and reduce unnecessary complexity, in the preferred embodiment the disbursement module 209 communicates directly with said system components whenever they provide sufficient required functionality.

e-Money Issuance and Redemption Platform - the disbursement module 209 communicates via network 207 with the e-Money issuance and redemption platform 210. The e-Money issuance and redemption platform 210 manages the issuance and redemption of electronic money (e-Money) in the system. All funds deposited into the system by the payer and redeemed by recipients are either created or redeemed by said platform 210. Funds issued and redeemed by platform 210 may be representations of one or more fiat currencies or cryptocurrencies. Platform 210 controls the issuance and redemption of funds in isolation from, or in conjunction with banks, credit unions, e-Money issuers, or other financial institutions 211, where coordination with said external parties is managed by the Financial Infrastructure Integration Server 212. The e-Money issuance and redemption platform communicates with external financial institutions via network 207 utilizing any available APIs or other communication protocols and methods.

Financial Infrastructure Integration Server - the e-Money issuance and redemption platform 210 may communicate with the financial infrastructure integration server 212 via network 207. The financial infrastructure integration server 212 may communicate with any external financial systems such as financial institutions, retailers, Automated Teller Machine (ATM) networks, telecommunications providers, and the like. Financial infrastructure integration server 212 may be comprised of provider modules 213 which are software components that may communicate with external financial systems 214 and may process any communicated data. The financial infrastructure integration server 212 may communicate with external financial systems 214 via network 207 utilizing any available APIs or other communication protocols or methods. Financial infrastructure integration server 212 may communicate with multiple modules to provide flexible and convenient recipient cash redemption options 216 to recipients and cost-effective payer fund transfer options 215 which reduces the amount of administrative work done by the payer.

Payer Fund Transfer Options - the payer fund transfer options 215 represent a collection of choices available to the payer which may be used to deposit or transfer funds into the disbursement system. These transfer options include, but are not limited to, transfer from bank account 217, and Peer To Peer (P2P) deposit 218 transfers.

Recipient Cash Redemption Options - 216 represent a collection of choices available to the recipient which may be used to conveniently redeem or "cash out" their collected disbursements. These redemption options include, but are not limited to, transfer to bank account 219, receive cash at a cardless ATM 220, receive cash at a participating retailer via retailer cash out 221, top up a telephone account balance via telephone top-up 222, and send Peer to Peer (P2P) transfer 223 to a contact. The specific set of redemption options available to the recipient are variable based upon the country of operation, regulatory requirements, availability of participating redemption points, etc., as well as the recipient access choice via web browser or application.

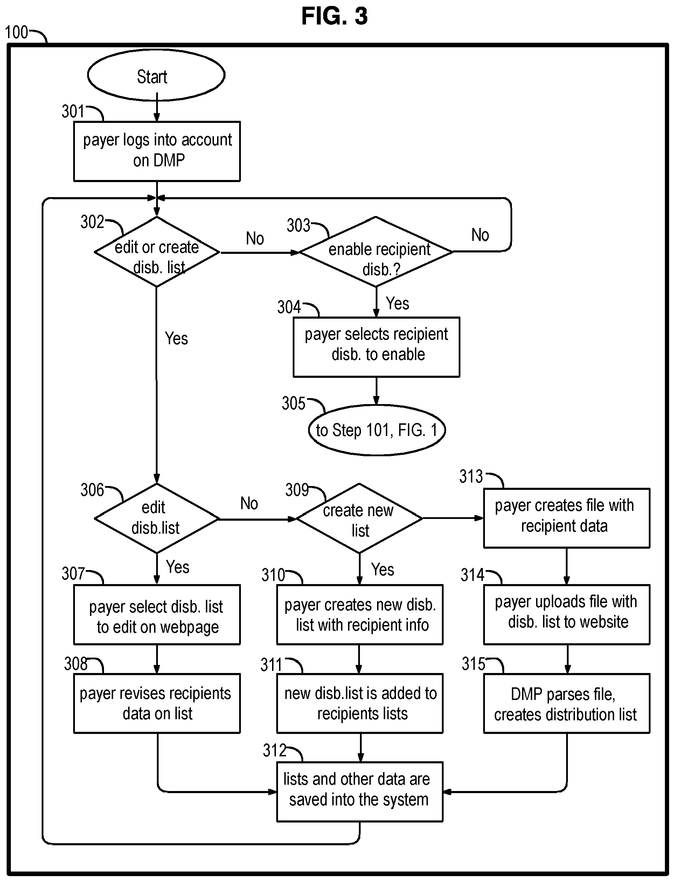

Fig. 3 illustrates an example method by which a payer may enter recipient disbursement and recipient contact information into the present invention. Fig. 3 shows in greater detail what was initially described in step 100 from Fig. 1. In step 301, the payer logs into their account via the disbursement management page 203 by using payer device 200.

The conditional step 302 relates to list management. In this step, the disbursement management page 203 may offer the payer the choice of creating or editing a disbursement list, or enabling disbursements for an existing list. If the payer wants to edit the data within a disbursement list or create a new disbursement list they may proceed to step 305. If they wish to manage disbursements in existing lists (enable, disable, report etc.) they would proceed to step 303.

In preferred embodiments, disbursement lists are sequences of data including, but not limited to, the amounts to be disbursed to specific recipients, the recipient name and any personal data, and the recipient contact information. In preferred embodiments, these lists may be of variable size, including one or multiple recipients, and the same recipient may be itemized more than once. The preferred embodiment thus allows for multiple disbursements to a specific recipient in a single list, possibly in multiple currencies. Preferred embodiments may support the occurrence of multiple disbursement lists which potentially have the same recipient represented within more than one list. The rationale behind supporting multiple disbursement lists is to more closely match periodic payroll practices, but an alternative embodiment could maintain a single disbursement list. Recipients who are not eligible to receive disbursements may be assigned a disbursement of zero in a list, or they may be excluded from a disbursement list.

Each entry in the disbursement list may contain the disbursement amount and enough identifying information for the present invention to uniquely identify individuals. In preferred embodiments, each entry may include, but are not limited to, the disbursement amount for the recipient, the recipient's name, and the recipient contact information (telephone number, email address, messenger id, or account username etc.). Alternative embodiments may require additional information be included in the upload file (for example direct payer, work location, organizational unit, manager, reviewer etc.), however the information submitted by the payer to create the list should be minimized where possible and instead require the recipient to submit their personal data to reduce administrative mistakes and overhead.

Returning to step 302, assume the payer chooses to edit or create a disbursement list, proceeding to step 305. Step 305 conditional is the split between edit or create a disbursement list. Assume the payer chooses to create a new disbursement list, proceeding to step 309.

In step 309 the payer may be presented with a conditional which determines if they wish to create the disbursement list via data entry on the web page or via a file upload. Assume the payer chooses to upload a file to create the disbursement list, proceeding to step 313.

In step 313 the payer may create a new file representing the list of recipient disbursements. In preferred embodiments, the uploaded file may be one of multiple formats, inclusive but not limited to XML, CSV, XLS, or proprietary formats. A single file may contain a single disbursement list or multiple disbursement lists. This file is created by an external editor and saved.

In step 314 the payer may upload the created disbursement list file. In preferred embodiments, said file may be uploaded to the web server 202 on the disbursement management page 203.

In step 315 the disbursement management page 203 receives the uploaded file, and in preferred embodiments, provides this to the disbursement module 209 to parse. An alternative embodiment could have the disbursement management page 203 itself parse the list. The parsed disbursement list is then added to managed disbursement lists and presented on the disbursement management page 203. The workflow proceeds to step 312.

In step 312 edited or created lists are saved by the system for future editing, enablement, or other management functions. In preferred embodiments, the persistence of data is managed by the disbursement module 209. Alternative embodiments may see this function managed by the web server 202 or another process. Depending on the applicable legal regulations, disbursement lists may contain personally identifiable information subject to data privacy laws which may dictate the storage method, location, and security measures. After saving the list the workflow returns to 302, where the payer may create, edit, or enable a disbursement list.

Returning to step 309, assume the payer wishes to create a new disbursement list directly on the web page (and not by uploading a file). The workflow then proceeds to step 310.

In step 310, the payer uses the disbursement list creation tools provided the disbursement management page 203 to create a new disbursement list. In preferred embodiments, the payer enters recipient name, disbursement amount, and recipient contact information via the web page form for each recipient. After the payer has finished adding entries to the disbursement list, the workflow proceeds to step 311.

In step 311, the new disbursement list is added to the managed disbursement lists associated with this payer by the disbursement management page 203. The workflow then proceeds to step 312 to save the data into the system.

Returning to step 306, assume the payer wishes to edit an existing disbursement list, proceeding to step 307. In preferred embodiments, the disbursement management page 203 provides an in-browser mechanism to select individual entries in an existing disbursement list, select multiple entries via grouping within an existing disbursement list, select an entire existing disbursement list, or select and multiple disbursement lists. Other selection aggregations and groupings such as by date, work division, location, direct payer and the like are natural extensions and where desired by the payer should be considered as other exemplary embodiments. After selecting the desired recipient entries or disbursement lists the workflow proceeds to step 308.

In step 308, the payer may edit all selected entries or disbursement lists. In the preferred embodiment edit functionality includes modifying existing recipient disbursement entries, adding new recipient disbursement entries, removing specific recipient disbursement entries, removing disbursement lists, or other aggregations and the like. Other exemplary embodiments may offer editing for additional groupings or association criteria. After the payer has finished editing they proceed to step 312 to save all modified information.

Returning to step 302, after one or more disbursement lists have been created the payer may proceed to enable disbursements via step 303. Once a recipient disbursement is enabled then the funds are made available for the recipient to collect the disbursement. In step 303 the payer has the option to enable disbursements or return to step 302. If the payer chooses to enable disbursements the workflow proceeds to step 304.

In the preferred embodiment in step 304, the payer selects the specific recipient disbursements, groups of recipients within disbursement lists, or entire disbursement lists to enable. Other exemplary embodiments may offer different grouping criteria for selections, by direct payer, date, work division, location, and the like as required by the payer. After the payer enables disbursements for the selected recipients or disbursement lists on disbursement management page 203, the workflow proceeds to step 101 in Fig. 1 where the recipient(s) are notified of available disbursement(s).

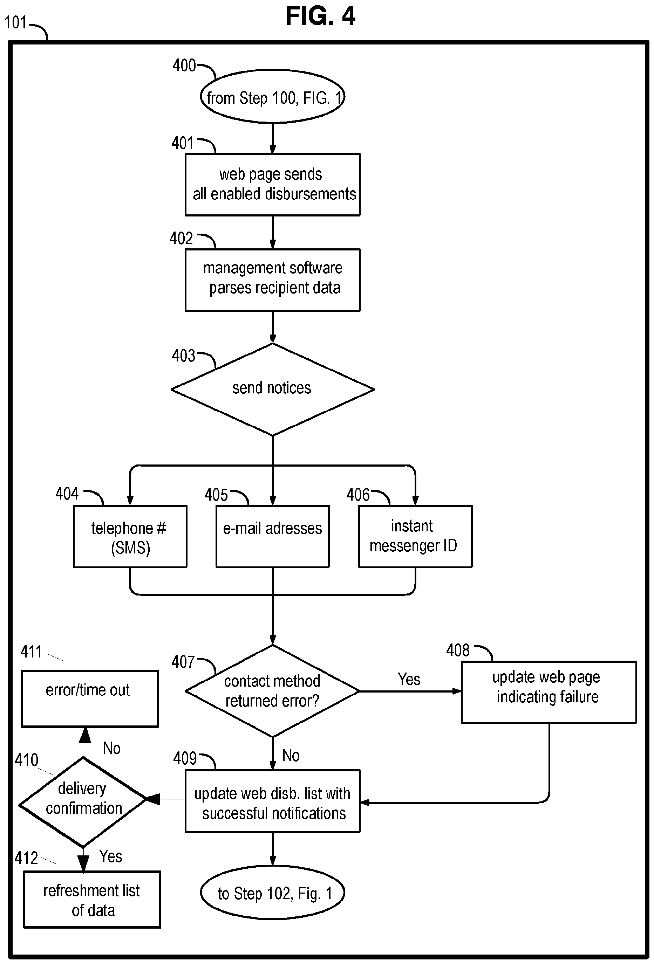

Fig. 4 illustrates an example method by which the present invention may notify recipients that their personal disbursement(s) are available for collection. Fig. 4 shows in greater detail what was initially described in step 101 from Fig. 1. Step 401 proceeds from step 100 in Fig. 1, where the payer enabled one or more individual recipient disbursements or disbursement lists on the disbursement management page 203. In the preferred embodiment in step 401, the web page communicates all enabled disbursement information to the disbursement module 209. Alternative embodiments could instead retain the information for processing within the web browser itself.

In preferred embodiments, in step 402, the disbursement module 209 parses, interprets, and processes the communicated enabled disbursement data. Alternative embodiments could do this processing from within the web browser itself.

Step 403 is a conditional, where the disbursement module 209 sends out notices based upon the type of recipient contact information is supplied for the recipient. By way of example step 403 in Fig. 4 demonstrates 3 electronic contact methods, but others contact methods may be substituted in alternative embodiments. If the payer has entered information for multiple contact methods the preferred embodiment supports attempting a second or subsequent contact methods upon failure of the first method.

When the recipient contact information is a telephone number, the workflow proceeds to step 404. In this step, a text message is created by the disbursement module 209 to send to the recipient's telephone number.

In step 405, the text message is sent via a SMS gateway to be sent to the recipient's contact telephone number. In preferred embodiments, the contents of the text message include a link to the downloadable app in the Google Play and Apple App Store or similar application stores. In preferred embodiments, the link contains additional parameterized information including a unique identifier associated with a specific recipient (when supported by the mobile phone's operating system). This information is used to fill in the payer-provided information that may be passed into the application upon launching the application. In preferred embodiments, the application may be launched by clicking on the link in the SMS message. In situations where the technology, operating system, or enabled permissions do not allow parameter passing or launching of the application, other embodiments of the present invention require the recipient to download, launch, and enter information themselves as necessary.

In step 407, after receiving the generated text, an SMS gateway may send the text message to the recipient's contact telephone number.

Returning to consider step 403 in the event the recipient contact information is an email address, an email is generated in step 405. In step 405 the email message is generated by the disbursement module 209 to be sent to the recipient's contact email. In preferred embodiments, the contents of the email include a link to the downloadable application stored on a web server. Additional links to mobile application store versions of the application may also be included in the email, for those situations where the recipient reads the email on their recipient device capable of passing parameterized information from the link into the launched application. Links containing parameterized information are as described in step 404. After generating an email, the disbursement module 209 sends the email to an email server for transmission to the recipient.

In step 408, after receiving the generated email, an email server may send the email to the recipient's contact email address.

Returning to consider step 403 in the event the recipient contact information is an instant messenger identifier, a new instant message is generated in step 406. Instant messengers are standalone or browser embedded programs or applications which provide real-time text transmission over a data network. Examples include Apple iMessage, Facebook Messenger, WhatsApp, Skype, Yahoo! Messenger, WeChat, QQ, and the like, including instant message aggregators.

In step 406 the instant message contents are generated by the disbursement module 209. In some embodiments, the contents of the instant message may be formed in the browser or created through multiple API calls to the instant messenger service. In preferred embodiments, the contents of the instant message include links to the downloadable application stored on a web server or in an application store such as Google Play or the Apple App Store. If the instant messaging program supports it, the links may contain parameterized information as described in step 404. After generating the instant message, it may be passed to the instant messenger gateway server for transmission to the recipient's instant messenger contact address. In the event the instant messaging services forms the message itself through API calls then the instruction to transmit may be sent instead.

In step 409, after receiving the generated instant message, the instant message gateway server may transmit the instant message to the recipient's contact instant message address.

In step 410, the preferred embodiment the disbursement module 209 waits for, or registers for delivery confirmation (when supported by the technology underlying for the chosen the contact method). If delivery confirmation is supported by the contact method the disbursement module 209 receives may receive an error or the response time out. If either form of notification failure occurs the workflow proceeds to step 411, where the disbursement module 209 updates the disbursement management page 203 detailing any notification failures with the associated recipient. The payer may view and use this information to see if there was an error in entering the recipient contact information or if the recipient should be contacted through an alternative means.

Returning to step 410, if there are no errors the workflow proceeds to step 412 where in the preferred embodiment the disbursement list data on disbursement management page 203 is refreshed with any successful recipient notifications. This update is supplied by the disbursement module 209. In some embodiments, it may not be possible for notification delivery to be confirmed and a "best attempt" delivery may be all that is feasible. In these situations, the update to the disbursement list may only detail that notification was sent. After having updated the disbursement list on the disbursement management page 203, the workflow proceeds to step 102 in Fig. 1.

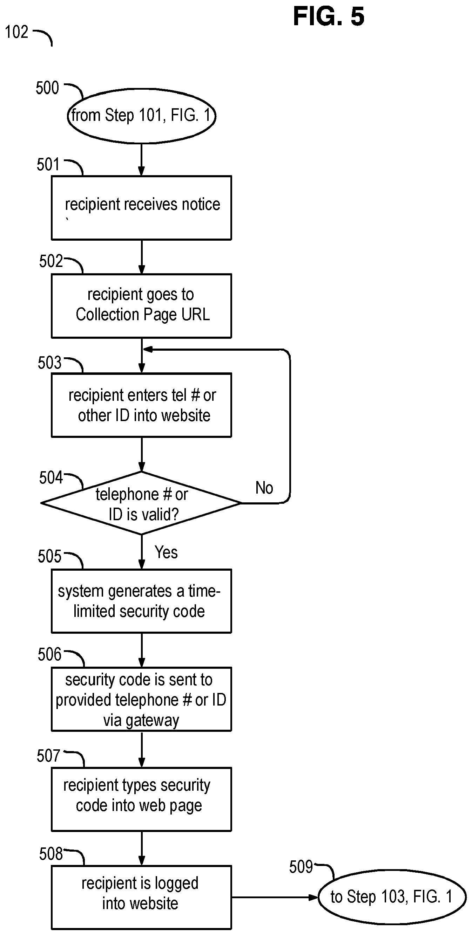

Fig. 5 illustrates an example method by which the recipient may receive their security code and authenticate themselves on the disbursement web site 202. Fig. 5 shows in greater detail what was initially described in step 102 from Fig. 1. Step 501 proceeds from step 101 in Fig. 1, where the recipient was sent electronic notification of available disbursement(s) and a security code. In step 501 the recipient receives notice via the specified contact method (SMS text, email, instant messenger ID, and the like). In preferred embodiments, the notification message contains a clickable link and optionally parameterized information as described in steps 404-406 of Fig 4.

In step 502 the recipient may use a web browser or another dedicated program running on a processing device (computer, mobile phone, tablet, etc.) that is capable of processing the provided URL link. In preferred embodiments, the recipient may click or select this URL link in step 502 to launch the URL in a web browser or similar application. Any passed parameterized information may be used to identify the recipient for statistical analysis, including but not limited to, the time the recipient clicked on the link to confirm receipt. In other exemplary embodiments, the URL link may be copied and pasted or typed directly into a web browser by the recipient, and may use services which shorten URLs to reduce the amount of information typed in by the recipient. After loading the provided URL, the recipient may be shown the collection page 204 in their web browser.

In step 503, the recipient is presented with a web form or similar page allowing data entry on the collection page 204. As with the disbursement management page 203, the collection page 204 is comprised of one or more virtual web pages defined in HTML, CSS, or the like. In step 503 the recipient enters their telephone number, email address, messenger id, or other used recipient contact information into the collection page 204. The collection page 204 sends this information to the disbursement module 209 for processing.

In step 504 the disbursement module 209 processes the contact information entered by the recipient. If the contact information represents a recipient who is eligible for disbursement or is otherwise considered valid, then the workflow proceeds to step 505. In the event the entered information is invalid the recipient is presented with an appropriate error and returns to step 503.

In step 505, having confirmed valid recipient contact information, the disbursement module 209 generates a security code. In preferred embodiments, this security code is time-limited and unique for this user. The security code may be an alphanumeric expression, or a common language phrase

Proceeding to step 506, the preferred embodiment may send the security code to the user via 2-factor authentication. By way of example, if the recipient contact information for a recipient is a telephone, a unique code may be sent to the user's telephone number, providing for additional security by requiring access to the device. Similar authentication checks are preferred for email, instant messenger, and other contact methods; sending a confirmation message that requires access to the contact account or device. When 2-factor authentication is not feasible, other exemplary embodiments may display this security code directly on the collection page 204, in which event the workflow would proceed directly to step 508. Returning to the preferred embodiment and step 506, the security code may be sent to the recipient's contact method.

Proceeding to step 507, the recipient has received the security code on their telephone or in their contact account. The recipient types this code into the collection page 204 directly to authenticate. In other exemplary embodiments, the security code itself could be a clickable link that auto-launches a web browser and confirms upon clicking or selection.

After the security code has been submitted to the collection page the workflow proceeds to step 508. In step, 508 the recipient is now logged into the collection page 204 in a session that is associated with their contact method information (telephone number, email address, messenger id, etc.). The workflow proceeds then to step 103, Fig. 1 (step 509), relating to the method by which the recipient may collect their disbursement funds.

Fig. 6 illustrates an example method by which the recipient may download the application and register an account into which they may collect their disbursements. Fig. 6 shows in greater detail what was initially described in step 105 from Fig. 1.

Step 600 proceeds from step 104 in Fig. 1, in which the recipient chooses to download and install an application 208. Step 601 is a conditional in which the recipient chooses (in part based upon their device) whether to install the application 208 from an application or "App" store, or by downloading an installer via a URL. Example application stores are the Google Play store, Apple App store, Microsoft Store and the like.

In the event the recipient device 205 is a mobile phone, tablet or similar device, they may download the collection application 208 via an application store in step 602. The links to the application store may be displayed on the collection page 204. The recipient may click or select this URL link to directly download, go to the application store download site, or be similarly directed by clicking or selecting said URL link. In other exemplary embodiments, the link URL may be copied and pasted or directly typed into a web browser to reach the application download page, FTP site, or alternative file retrieval methods. The application store may dictate the specific installation procedure, included any granted permissions on recipient device 205 which is performed in step 604.

In the event the recipient device 205 is personal computer or similar device, they may download the application 208 as an installer from the URL links provided by the web server 202. In this case the workflow proceeds to step 603. The provided URL links may be displayed by the collection page 204. The recipient may click or select this URL link to directly download, go to the application store download site, or be similarly directed by clicking or selecting said URL link. In other exemplary embodiments, the link URL may be copied and pasted or directly typed into a web browser to reach the application download page, FTP site, or alternative file retrieval methods. The installation procedure and permissions granted in step 604 may vary by operating system. In exemplary embodiments, the installation may be a self-extracting executable, uncompiled source code, and with manual or guided configuration and setup on recipient device 205.

In step 605, having already finished installing the application 208, the recipient now starts, or launches, the application on recipient device 205.

Once launched, the application 208 may allow the user to log in to an existing account or create a new account. In step 606 the recipient registers a new account, providing a unique username. Recipient device 205 communicates this information over network 207 to the disbursement module 209 over network 207. In preferred embodiments, this communication is directly between the application 208 and the disbursement module 209. In other exemplary embodiments said communication may be routed through the web server 202.

In step 607 the user provides a password for the new account. In preferred embodiments, this password is sufficiently strong to resist dictionary and brute force attacks. Further, the preferred embodiment tracks statistics such as the number of accounts created on a recipient device 205, the number of failed attempts to log in, and other security related information and take measures to block abusive devices. Step 607 may be processed at the same time as step 606, or it may be sequential as drawn in the workflow.

After submitting a valid account name and password the disbursement module 209 generate a new system account for the recipient. In step 608 the application 208 is logged into this new account following successful account creation on the recipient device 205. In preferred embodiments, this account login into the application 208 occurs immediately after account creation without logging out. Other exemplary embodiments may require the recipient to explicitly log out of and back into the application 208 again following account creation.

Having successfully created an account and logged into it via the application 208, the workflow proceeds to step 106, Fig 1 (step 609) and as further detailed in Fig. 7.

Fig. 7 illustrates an example method by which the recipient may enter their personal information into the application, and transfer this data to the payer. Fig. 7 shows in greater detail what was initially described in step 106 from Fig. 1.

Step 700 proceeds from step 105 in Fig. 1. The recipient has chosen to collect their disbursement funds via an application 208 downloaded onto recipient device 205. Further said application 208 has been installed, an account has been registered and is currently logged into said account on application 208.

In step 701 the recipient navigates to the personal data screen within the software application 208.

In step 702, in preferred embodiments, the personal data screen of application 208 indicates all required fields in the UI. Exemplary embodiments may provide no indication, or indication in the form of highlighting, brighter colors, bold facing text, outline boxes, the priority ordering of data entry, fields, or similar display methods. Data fields are marked as required based upon the configuration for a specific payer and legal jurisdiction. Different payers may have different required fields.

In step 703, the recipient enters their information into all required data fields in the application 208 and, at their choice, any optional fields.

In step 704, the recipient saves their changes in application 208.

In step 705, in preferred embodiments, the application 208 may save the information into either local storage on the recipient device 205. In other exemplary embodiments, the data may be saved in a secure manner to other devices a distributed database, cloud, or a remote server through disbursement module 209. Separate from persistence, the required recipient data may be communicated to the payer. All recipient data marked as required may be made available to the disbursement management page 203 by the disbursement module 209. The payer may view and export this data to comply with tax, and workplace regulations.

In step 706, the workflow proceeds to step 107, Fig. 1.

Fig. 8 illustrates an example method by which the recipient may collect available disbursement funds into their installed application 208. Fig. 7 shows in greater detail what was initially described in step 109 from Fig. 1.

Step 800 proceeds from step 108 in Fig. 1. The recipient has entered their security code on collection page 204 and logged into their account via application 208. In preferred embodiments, the recipient is not required to be contemporaneously logged into both the website and the application - the recipient may log into the application sequentially at any point after initiating the collection on collection page 204.

In step 801 the recipient initiates the disbursement collection process from the collection page 204.

In step 802 the collection page 204 notifies the disbursement module 209 that the recipient has requested disbursement collection. The disbursement module 209 confirms the current enabled and uncollected status of the requested disbursement.

In preferred embodiments, in step 804 the disbursement module 209 transfers the uncollected disbursement funds related to this recipient from the payer account into a temporary escrow account. Other exemplary embodiments could transfer funds directly to the recipient account, albeit with a concurrent loss of security, in such embodiments the workflow would proceed directly to step 806.

In step 805 of the embodiment of the present invention presents a conditional path based upon whether 2-factor authentication is enabled. In the preferred embodiment 2-factor authentication is used to ensure the person who gained access to the collection page 204 is indeed the recipient.

Assuming 2-factor authentication is enabled in the embodiment, the workflow proceeds to step 809. In step 809 the disbursement module 209 may generate a collection code that is used by the recipient to collect funds. The workflow then progresses to step 810.

In step 810, the system may send this collection code to the recipient's contact method (telephone number, email address, instant messenger ID, and the like).

Step 811 is a conditional determined by the embodiment and the contact method used. If the contact method supports links that automatically launch applications and passing parameters then the workflow proceeds to step 814.

In step 814 the recipient has received a collection code and a link through their preferred contact method. The recipient may click or select the link and the application 208 may be automatically launched. The recipient may then log into their account, after which the workflow progresses to step 815.

In step 815 the application has been launched on recipient device 205. If the contact method supports parameter passing, the security code may be passed into the application 208 automatically as well. If parameter passing is not supported the recipient may enter the code directly into the application 208 through the user interface.

In step 813 the collection code has been entered into the application 208. The application 208 sends this code to the disbursement module 209 for verification. Upon verification, the workflow progresses to step 806.

Returning to step 811, in the embodiments where links in the contact method do not support launching the application 208 or sending parameterized information, then the workflow progresses to step 812.

In step 812 the recipient launches the application 208 from their device 205 (if it is not already running) and logs into their account. The recipient may enter the received collection code manually into the user interface of the application 208. After entering their collection code, the workflow progresses to step 813.

Returning to step 805, for those embodiments that do not use 2-factor authentication, the workflow proceeds instead to step 806.

In step 806 the disbursement module 209 initiates the process to transfer the disbursement funds.

In step 807 the disbursement module 209 notifies the recipient application 208 of the availability of disbursement funds.

In step 808 the disbursement module 209 transfers disbursement funds from the escrow account to the recipient account. The status of this disbursement for the collecting recipient is updated to "collected". The workflow progresses to step 110, Fig. 1 (step 816).

Fig. 9 illustrates an example method by which the recipient may redeem their collected disbursements from their installed application 208. Fig. 9 shows in greater detail what was initially described in step 110 from Fig. 1. Step 900 proceeds from step 109, Fig. 1.

In step 901 the recipient chooses from the available redemption methods. The specific set of available redemption methods may depend upon payer choices, applicable legal regulations, local communication infrastructure, and local technology costs. The preferred embodiment provides as many redemption methods as is feasible to provide the maximum possible flexibility and convenience to recipients. The preferred embodiment described in Fig. 9 includes several redemption options but is not inclusive of all possibilities. Other exemplary embodiments may include redemption options such as converting into prepaid cards, codes, e-wallet value stores, loyalty rewards systems, or merchant "points" systems. Additional embodiments may see redemption for various physical or virtual services, redemption at e-commerce merchant sites, redemption into cryptocurrencies, redemption into foreign currencies, redemption into securities and derivatives, redemption into government debt or credit instruments, and the like.

In step 902 the recipient chooses and amount of disbursement funds to redeem through an automatic teller machine (ATM) 220 and receive physical cash. In preferred embodiments, redemption through ATMs may be facilitated by banks which operate ATMs or independent ATM provider networks. In preferred embodiments, the redemption of disbursement funds may be most convenient for recipients through the use of "cardless" ATM codes. Cardless ATM codes enable redemption at any supporting private ATM network or bank network, maximizing the number of accessible ATMs for a recipient and eliminating the need for a separate bank account. Other exemplary embodiments may use partner banks to redeem disbursement funds for cash at specific supporting bank ATMs, either with cardless codes or by requiring a qualifying ATM card.

Communication between the disbursement module 209 and the ATM service providers is managed by the e-money issuance and redemption platform 210, and the financial infrastructure integration server 212. In the case of ATMs, a specific provider module 213 within the financial infrastructure integration server 212 communicates with the ATM service provider.

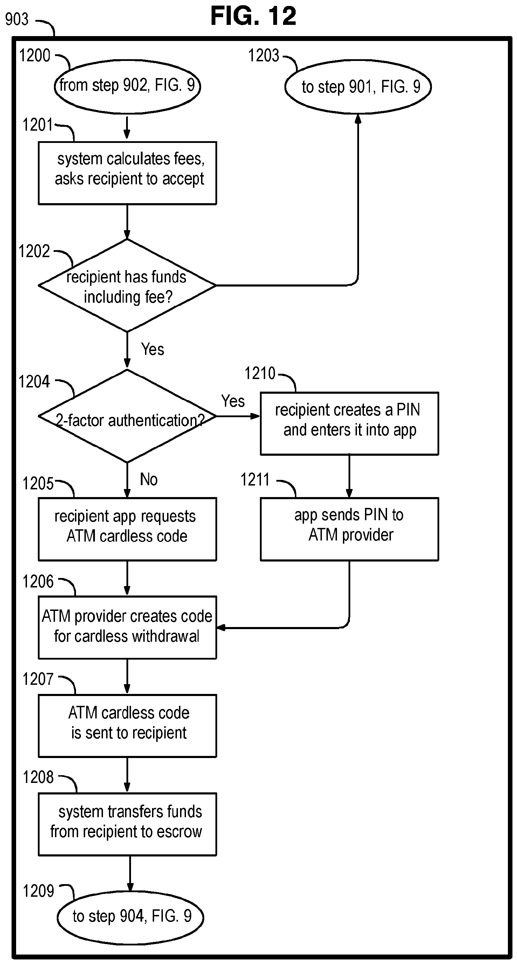

In step 903 the disbursement module 209 creates a withdrawal code and sends it to the recipient via the network 207. Recipient application 208 receives this redemption code and notifies recipient. See Fig. 12 for additional details on this step.

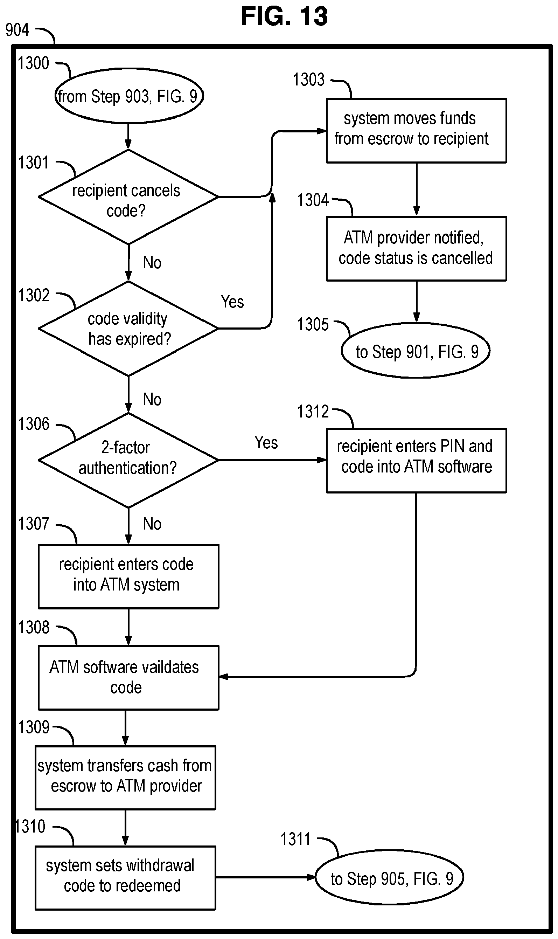

In step 904 the recipient navigates to the correct menu on the ATM screen and may enter the redemption code into the physical ATM 220. In preferred embodiments, a PIN may be chosen by the recipient and communicated to the ATM provider through the disbursement module 209 to increase security. Other exemplary embodiments may use different forms of 2-factor authentication, or none where it is infeasible. See Fig. 13 for additional details on this step.

In step 905 the recipient may receive the physical cash from the ATM 220 and the funds are removed from their account by the disbursement module 209. In preferred embodiments, the redemption history may be updated by the disbursement module 209 and displayed in the application 208 and the collection page 204. Other exemplary embodiments may eschew displaying redemption histories. When the funds are removed from the recipient's account, the e-Money issuance and redemption platform 210 may be notified by the disbursement module 209 of the redemption.

In step 906 the disbursement module 209 may settle aggregated payments owed by the disbursement system to the ATM provider for the face value of redemption plus any fees. The e-Money issuance and redemption platform may transfer the equivalent funds from the backing funds account held at the banks and financial institutions 211 to the ATM provider using standard payment methods. In preferred embodiments, the e-Money issuance and redemption platform 210 may then record this transaction and recognize the removal of the transferred funds from the system for accounting and recordkeeping purposes.

In step 950 the disbursement module 209 aggregates and settles redemption payments owed by the disbursement system to the ATM provider for the face value of redemption plus any fees.

Returning to step 901, when the recipient chooses to redeem disbursement funds through a transfer to bank account 219 the workflow proceeds to step 910. In many countries, there are multiple bank transfer methods available to banks and financial institutions 211, often varying in cost and time until final settlement. In preferred embodiments, redemption through bank transfers may be performed using the fastest yet economical bank transfer method available. Communication between the disbursement module 209 and the transfer to bank account 219 may be managed by the e-Money issuance and redemption platform 210, and the financial infrastructure integration server 212. For bank transfers, a specific provider module 213 within the financial infrastructure integration server 212 may communicate with the banking system represented by banks and financial institutions 211 to send the bank transfer.

In step 911, if the data is not already populated, the recipient may enter their bank account number into the application 208. In preferred embodiments, numerous bank account numbering schemes are supported, including, but not limited to: sort code and account number, routing number and account number, IBAN, and other 1, 2, or multi-part account identification formats.

In step 912 the recipient may enter the amount of money to transfer to a bank account 219 into the application 208.

In step 913 the application 208 may send the bank transfer redemption request for the specified amount to the disbursement module 209. The disbursement module 209 may notify the e-Money issuance and redemption platform 210 to perform a redemption for the given funds. The e-Money issuance and redemption platform 210 may send the backing funds to the specified bank account through the banks and financial institutions 211. In preferred embodiments, the e-Money issuance and redemption platform 210 may then record this transaction and recognize the removal of the transferred funds from the system for accounting and recordkeeping purposes.

In step 914 the recipient may receive funds that have been deposited in the specified bank account after the settlement period for the utilized bank transfer. After this step, the workflow progresses to step 115, Fig. 1.

Returning to step 901, when the recipient chooses to redeem disbursement funds through a retailer cash out 221 the workflow proceeds to step 920. In preferred embodiments, the recipient may generate a unique voucher which they may then present and "cash out" at a retailer 221. In preferred embodiments, multiple retailer networks may be integrated with the present invention to maximize the number of locations a recipient may utilize. The "cash out" vouchers are unique and may be traditional alphanumeric text codes, or 2D or 3D codes such as barcodes, QR codes, and the like. In preferred embodiments, connected retailers may have an electronic communication mechanism by which "cash out" vouchers may be requested, cancelled, or redeemed, integrated by way of a provider module 213 that runs within the financial infrastructure integration server 212. Further, in preferred embodiments, retailers may operate a system inside store locations that may read or scan a code, or allow for manual entry of a code. In preferred embodiments, said in-store system may electronically communicate with provider module 213 when vouchers are redeemed in a store. Where electronic retailer integration is not possible, other exemplary embodiments may include printed or copied codes and barcodes.

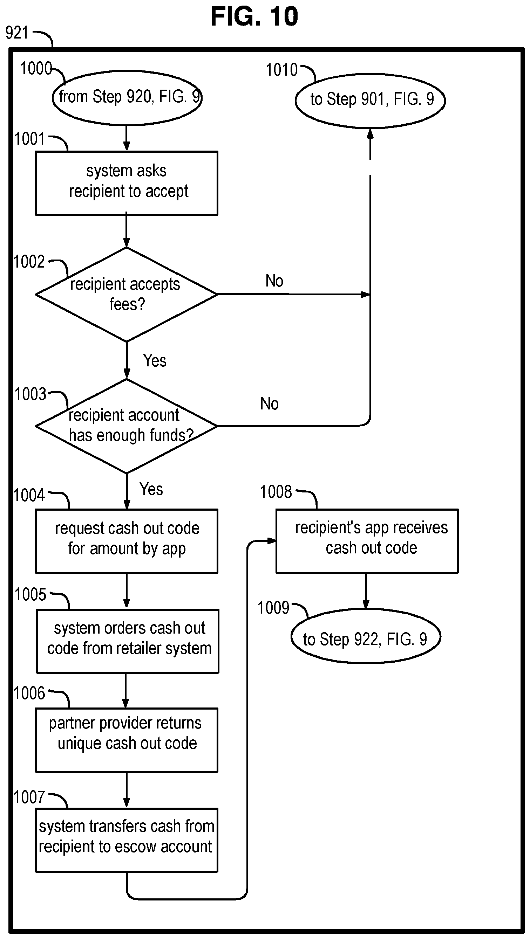

In step 921, the recipient may use the application 208 to generate a unique voucher code. The request to generate a voucher is made of the disbursement module 209, which in turn may contact the e-Money issuance and redemption platform 210, and a provider module 213 inside the financial infrastructure integration server. Provider module 213 may be integrated with the retailer cash out 221 software system. This process is illustrated in more detail in Fig 10.

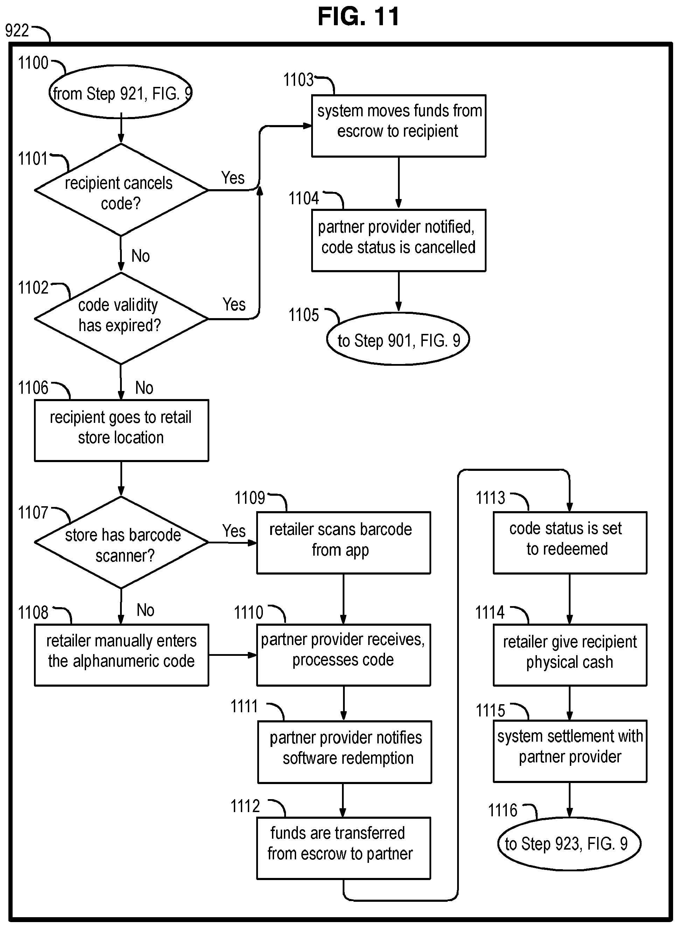

In step 922, the recipient presents the voucher code at the retailer. The retailer may scan or enter this voucher into their system to verify the validity and cash out amount. In preferred embodiments, the retailer software system may communicate the redemption to the provider module 213 so the disbursement payment system may update the status. This process is illustrated in more detail in Fig 11.

In step 923, the recipient may receive physical money from the retailer. In preferred embodiments, the e-Money issuance and redemption platform 210 may then record this transaction and recognize the removal of the transferred funds from the system for accounting and recordkeeping purposes. The workflow then proceeds to step 115, Fig. 1.

Returning to step 901, when the recipient chooses to redeem disbursement funds through a telephone top-up 222 the workflow proceeds to step 930. In preferred embodiments, telephone top-up means to add funds to a telecommunications operator account, and is not specifically restricted to those offering only, or primarily, telephone service. Other services offered by such an account may include, but are not restricted to, cable television, satellite television, cellular or mobile phone service, landline phone service, internet data service (wireless, DSL, cable modem, fibre optic, satellite, stratospheric wireless networks, and the like). Recipients may have telephone service through one of multiple telecommunication companies. In preferred embodiments, telephone top-up redemptions may be available from multiple telecommunication operators and telephone top-up providers to provide recipients with the most choice. In preferred embodiments, connected telecommunications operators and telephone top-up providers may have an electronic communication mechanism by which telephone top-up orders may be processed. In preferred embodiments, telecommunication operators and telephone top-up providers provider may add funds to the specified telephone account directly. In other exemplary embodiments, the telecommunication operators and telephone top-up providers may provide a code that may subsequently be redeemed to top-up a telephone account.

In step 931, the recipient chooses a telephone top-up 222 redemption in the application 208. In preferred embodiments, the application 208 may prompt the recipient for the telephone number to top-up, and the telecommunication operator who provides their service. In other exemplary embodiments, the recipient may enter the telecommunications account number instead when there is no specific telephone service associated with the account to top up. The request to top-up the account may be sent by the application 208 to the disbursement module 209.

In step 932, the disbursement module 209 may send a request to the financial infrastructure integration server 212 to request a telephone top-up 222. The associated provider module 213 may ask the selected telephone top-up provider if the provided telephone number is valid for the given network. If the telephone number is valid, the provider module 213 may determine any redemption fees and may request that the disbursement module 209 to acknowledge the order. The disbursement module 209 in turn may send the fee verification request to the application 208 for the recipient to acknowledge. In preferred embodiments, the recipient may be presented with the confirmation request of the fee and order in the application 208. If the recipient consents to the fee, application 208 may send the acknowledgement to the disbursement module 209, which in turn may send the confirmation to the provider module 213. The provider module 213 may send confirmation of the order of the telephone top-up 222 to the telecommunications operator or telephone top-up provider system.

In step 933, the telecommunications operator or telephone top-up provider system has received the order for a telephone top-up amount for a specific telephone number or account. This request is honored and funds may be applied to the target telephone number or account. In preferred embodiments, the telecommunications operator or telephone top-up provider system may notify the provider module 213 with the success of the order.

In step 934, the provider module 213 receives notification of the successful order. Provide module 213 may notify the e-Money issuance and redemption platform 210 which in turn may notify the disbursement module 209 to transfer funds from the recipient's account to the telecommunications operator or telephone top-up provider. The recipient may be notified of the successful transaction via the application 208.

In step 935, the e-Money issuance and redemption platform 210 may send funds to the telecommunications operator or telephone top-up provider bank account through banks and financial institutions 211. In preferred embodiments, the e-Money issuance and redemption platform 210 may record this transaction and recognize the removal of the transferred funds from the system for accounting and recordkeeping purposes. Next, the workflow progresses to step 115, Fig. 1.

Returning to step 901, when the recipient chooses to redeem disbursement funds by sending a Peer to Peer (P2P) transfer 223 the workflow proceeds to step 940. In preferred embodiments, P2P transfer means the recipient sends funds to another user account which utilizes a payment system based on the present invention. In the context of Fig. 9 the P2P transfer may be sent by the recipient to another account through the application 208. In preferred embodiments, for the recipient to send a P2P transfer, the recipient account must have already been created. However, in preferred embodiments, the recipient is not required to install the application 208 prior to the recipient sending the P2P transfer.

In step 941 the recipient may enter into the application 208 the amount and the username of the account they wish to send funds to through a P2P transfer 223. The application 208 may send the transfer notice to the disbursement module 209. In preferred embodiments, the disbursement module 209 may validate the P2P recipient username has been created and that there are sufficient funds in the recipient's account to send the requested amount. In other exemplary embodiments, validation may instead be performed in the application 208, or at a central or decentralized validation authority.

In step 942 the disbursement module 209 may sends notice to the recipient account that funds are available for receipt. In preferred embodiments, the P2P recipient may be notified through whatever application notification settings they have enabled (SMS, email, in-application notice, and the like).

In step 943 the disbursement module 209 may accept the transfer of funds to the recipient. In preferred embodiments, such acceptance is automatic. In other exemplary embodiments, the acceptance of funds may require the P2P recipient to accept through the application or in response to the notification message from step 942.

In step 944 the disbursement module 209 may transfer the funds from the recipient's account into the P2P recipient's account over network 207. In preferred embodiments, both recipient and P2P recipient may be informed of the completed transfer and each receive a transaction record. In other exemplary embodiments, step 944 may occur simultaneously with the initial validity check, in conjunction with a temporary holding or escrow account. In preferred embodiments, the e-Money issuance and redemption platform 210 may record this transaction and recognize the removal of the transferred funds from the system for accounting and recordkeeping purposes. After step 944, the workflow progresses to step 115, Fig. 1.

Fig. 10 illustrates an example method by which the recipient may receive a retailer "cash out" voucher in the application 208. Fig. 10 shows in greater detail what was initially described in step 921 from Fig. 9. Step 1000 proceeds from step 920, Fig. 9. The recipient has requested to redeem via retailer cash out 221 within the application 208, and the workflow proceeds to step 1001.

In step 1001 the disbursement module 209 calculates any fees applicable to retailer cash out 221, and requests confirmation via the application 208. The confirmation request may be presented to the recipient in the application 208.

In step 1002 if the recipient does not accept the fees the workflow proceeds to step 1011, returning to where the recipient chooses a redemption method in step 901, Fig. 9. In the event the recipient accepts the fees, the workflow proceeds to step 1003.

In the exemplary embodiment, in step 1003 the disbursement module 209 validates that the user has sufficient funds available to send the proposed amount plus fees. If the recipient does not have sufficient funds in their account the workflow proceeds to step 1010, returning to where the recipient chooses a redemption method in step 901, Fig. 9. In the event the recipient does have sufficient funds then the workflow proceeds to step 1004. In the other exemplary embodiments, the validation of sufficient funds may occur in the application 208.

In step 1004 the application 208 sends a request for a cash out code to the disbursement module 209. The disbursement module 209 in sends the request to the financial infrastructure integration server 212. The financial infrastructure integration server 212 sends this request to a provider module 213 that it hosts which is capable of executing a retailer cash out 221.

In step 1005 the provider module 213 communicates with the external retailer cash out system 221 over network 207. Provider module 213 requests a cash out voucher code for the specified amount from the retailer system. In preferred embodiments, this communication may be electronic and automated by software. Other exemplary embodiments could include manual processes or communication.

In step 1006 the retailer cash out system 221 responds to the provider module 213 with a cash out voucher code. The code may be provided by the financial infrastructure integration server 212 to the disbursement module 209.

In preferred embodiments, in step 1007 the disbursement module 209 transfers the cash out voucher amount plus any fees from the recipient's account into an escrow account. In the event a retailer cash code expires or is cancelled, the use of an escrow account makes the process of rescinding codes simpler. Other exemplary embodiments may eschew the escrow account and directly transfer the funds to the retailer.

In step 1008 the cash out voucher code may be communicated by the disbursement module 209 to the application 208. The application 208 may store this code for later display. After step 1008, the workflow progresses to step 922, Fig. 9 in step 1009.

Fig. 11 illustrates an example method by which the recipient may present a cash out voucher code at the retailer. Fig. 11 shows in greater detail what was initially described in step 922 from Fig. 9. Step 1100 proceeds from step 921, Fig. 9. The recipient currently has a cash out voucher code worth a specified face value amount stored in their application 208, and the workflow proceeds to step 1101.

In preferred embodiments, in step 1101 the recipient has the choice of cancelling the retailer cash out voucher 221 from the application 208 and receiving a refund for the voucher amount to their account. If the recipient chooses to cancel their code the workflow proceeds to step 1103. In this event, the recipient makes the cancellation request through the application 208. In other exemplary embodiments, the recipient could also cancel through a customer support request. The application 208 sends the cancellation request to the disbursement module 209. Other exemplary embodiments may eschew the ability to cancel codes, at a commensurate loss of convenience for the recipient.

In step 1103 the cash out voucher code may be cancelled due to recipient request or voucher code expiration. In the preferred embodiment the disbursement module 209 transfers funds from the escrow account back into the recipient's account. In other exemplary embodiments which did not use an escrow account this step may be skipped.

In step 1104 the external retailer system may be notified of the cash out voucher cancellation. The disbursement module 209 sends this cancellation notice to the financial infrastructure integration server 212 which in turn sends the notice to the provider module 213. The provider module 213 notifies the external retailer system over the network 207, providing the voucher identifier and all other information required for cancellation. Additionally, the disbursement module 209 sets the code status to cancelled internally, and notifies the application 208 of the confirmed cancellation. After such a cancellation, the workflow returns to where the recipient may choose a redemption method in step 901, Fig. 9 (in step 1105).

Returning to step 1101, in the event the user does not wish to cancel their cash out voucher code the workflow progresses to step 1102.

In step 1102 the disbursement module 209 periodically check if the voucher has expired. If the cash out voucher code has expired, the disbursement module 209 proceeds to cancel the cash out voucher and proceed to step 1103. In the event the code is still valid and unexpired, the workflow progresses to step 1106.

In the preferred embodiment cash out vouchers may expire after a specified amount of time or after a fixed date or time. Upon expiry, the funds associated with forgotten or otherwise unused vouchers are refunded to the recipient's account. Other exemplary embodiments may use unexpiring or very long-dated expiries for cash out vouchers.

In step 1106 the recipient has a valid unexpired cash out voucher code that they wish to redeem at a retailer. In preferred embodiments, in order to redeem their code, the recipient goes to a participating retail store location. In other exemplary embodiments, the recipient may be able to submit redemption requests electronically or by other remote methods and receive physical cash by courier or other delivery methods.

Step 1107 occurs at the retailer location. If the retailer store has a compatible barcode scanner, Optical Character Recognition (OCR) or similar reader the workflow progresses to step 1109. Such readers may be capable of scanning a cash out voucher code presented by the application 208 or as a screenshot of the application 208 on a display screen used by a mobile phone, laptop, tablet or similar display device 205 associated with recipient device 205. In other exemplary embodiments, the recipient could make a printout of the cash out voucher code to be scanned.

In step 1109 the retailer scans the barcode from the display or printout using the scanning device. This scanning device may be connected to the retailer's software system which processes the scanned cash out voucher code. The retailer software system may be owned and managed by the retailer directly, or communicates with one or more additional software systems owned and managed by code providers and system integrators.

In preferred embodiments, in step 1110 the retailer's software system transmits the scanned code from the reader machine to a cash out voucher code management system. Said retailer software system may process and validate the scanned code.

In step 1111, the retailer's software system notifies the provider module 213 in the financial infrastructure integration server 212 of the successful scan of the code. The financial infrastructure integration server 212 in turn notifies the disbursement module 209. Other exemplary embodiments may at this point immediately pay the recipient prior to waiting for fund transfers. In such embodiments, the workflow would skip steps 1112-1114 and proceed immediately step 1115.

In step 1112, in preferred embodiments, the disbursement module 209 moves funds from the escrow account to the retailer partner account.

In step 1113, the disbursement module 209 updates the code status to "redeemed". The disbursement module 209 notifies the application 208 which also updates the cash out voucher code to redeemed.

In step 1114, in preferred embodiments, the disbursement module 209 notifies financial infrastructure integration server 212 of the fund transfer. The financial infrastructure integration server 212 in turn notifies the provider module 213 of transfer. The provider module 213 notifies the external retailer software system that funds have been transferred and the recipient may be eligible to receive physical money at the retailer location.

In step 1115, the disbursement module 209 notifies the e-Money issuance and redemption platform 210 that the external retailer is to receive payment for the redemption service and transfer funds from the backing bank account held at banks and financial institutions 211. After step 1115, the workflow progresses to step 923, Fig. 9.

Returning to step 1107, in the event the retailer location does not have a compatible scanner (or in the event the scanner is not operating correctly) the workflow proceeds to step 1108.

In step 1108, the retailer manually enters the code displayed on the recipient's device 205 into the retailer's software system. After manual entry is complete the workflow proceeds to step 1110.

Fig. 12 illustrates an example method by which the recipient may receive a cardless ATM withdrawal code from an application 208 to be used to redeem through an ATM 220. Fig. 12 shows in greater detail what was initially described in step 902 from Fig. 9. Step 1200 proceeds from step 901, Fig. 9 where the recipient has chosen to redeem via an ATM 220.

In step 1201, the disbursement module 209 calculates any fees applicable to ATM redemption 220, and requests confirmation via the application 208. The confirmation request may be presented to the recipient in the application 208.

In step 1202 if the recipient does not have sufficient funds or does not accept the fees the workflow proceeds to step 1203, returning to where the recipient chooses a redemption method in step 901, Fig. 9. In the event the recipient accepts the fees, the workflow proceeds to step 1204.

Step 1204 is a conditional path depending on the embodiment implementing 2-factor authentication. In the preferred embodiment, 2-factor authentication may be implemented and the workflow proceeds to step 1210. 2-factor authentication adds extra security, requiring the user to have access to multiple accounts and or a device.

In step 1210, the recipient creates a PIN for this redemption transaction by entering the PIN into the application 208. The PIN may be transmitted from the application 208 to the disbursement module 209, which in turn sends the data to the financial infrastructure integration server 212 and provider module 213.

In step 1211, the provider module 213 requests an ATM withdrawal code from the ATM provider software over the network 207. This request includes the PIN information and is made using an API or other agreed-upon communication protocol. The ATM provider may validate the cash out request at the ATM 220 with this PIN. The workflow proceeds then to step 1206.

Returning to step 1204, in exemplary embodiments which do not use 2-factor authentication, the workflow proceeds directly step 1205. In step 1205, the application 208 requests an ATM withdrawal code from the disbursement module 209, which in turn requests the code from to the financial infrastructure integration server 212 and provider module 213. The provider module 213 requests an ATM withdrawal code from the ATM provider software over the network 207 using an API or agreed-upon communication protocol.

In step 1206, the ATM provider system generates a withdrawal code for the specified amount.

In step 1207, the ATM provider system sends the withdrawal code to the provider module 213 over the network 207, which in turn sends the code through the financial infrastructure integration server 212 to the disbursement module 209 over network 207. The disbursement module 209 sends the code to the recipient contact method (SMS, email, instant messenger and the like).

In preferred embodiments, in step 1208, the disbursement module 209 transfers funds from the recipient account into an escrow account. Other exemplary embodiments may eschew the escrow account, but this may cause code cancellation and any refund process to be more complicated. After step 1208, the workflow progresses to step 904, Fig. 9.

Fig. 13 illustrates an example method by which a recipient may enter their cardless ATM withdrawal code into an ATM 220. Fig. 13 shows in greater detail what was initially described in step 904, Fig. 9. Step 1300 proceeds from step 903, Fig. 9 where the recipient requested a redemption by ATM 220 and has already received a withdrawal code. In preferred embodiments, the recipient has also submitted a PIN for additional security. Fig. 13 occurs with the recipient at the physical ATM 220.

Step 1301 is the conditional whereby the recipient may cancel their withdrawal code at any point up until actual redemption. If the recipient cancels their code, the workflow proceeds to step 1303.

In step 1303, the code has been cancelled, has expired, or is otherwise no longer valid. In the case of recipient-initiated cancellation, the application 208 running on recipient device 205 notifies the disbursement module 209 of the cancellation request. In the case of expiration, the disbursement module 209 recognizes that the expiration of a code has passed. Other exemplary embodiments may check for code expiry in various software components or via manual processes. The disbursement module 209 moves funds from the escrow account back into the recipient's account.

In step 1304, the disbursement module 209 sends a cancellation request or expiry notice to the financial infrastructure integration server 212 and provider module 213. The provider module 213 then sends a cancellation request or expiry notice to the ATM provider software system, using an API or another agreed-upon protocol. The workflow then proceeds to step 901, Fig. 9, where the recipient again has their choice of redemption options.

Returning to step 1301, in the event the recipient does not wish to cancel their withdrawal code, the workflow proceeds to step 1302. Step 1302 is a conditional which checks if a code has expired or is otherwise invalid, in which case the workflow proceeds to step 1303 and code invalidation. In the event the code has not expired and is valid the workflow proceeds to step 1306.

Step 1306 is a conditional based upon whether the embodiment used 2-factor authentication in step 903, Fig. 9 (also steps 1210, 1211, Fig. 12) where the recipient chose a PIN for additional security. If the embodiment utilized a PIN then the workflow proceeds to step 1312.

In step 1312, the recipient enters the same PIN they previously submitted into the ATM. The ATM provider has already received this PIN and may check that it matches.

Returning to step 1306, in the event a 2-factor authentication was not used in the exemplary embodiment, the workflow instead proceeds to step 1307.

In step 1307, the recipient enters the withdrawal code they received into the ATM.

In step 1308, the ATM validates the entered withdrawal code, and if utilized, the entered PIN. If all required codes are valid the ATM may authorize issuance of the specified amount to the recipient. The ATM provider then software notifies the provider module 213 of the redemption at the ATM.

In step 1309, the provider module 213 notifies the disbursement module 209 through the financial infrastructure integration server 212 of the redemption at an ATM. The disbursement module 209 transfers the withdrawal amount plus fees from the escrow account into the ATM provider account.

In step 1310, the disbursement module 209 updates the withdrawal code status within the system to "redeemed" and notifies application 208 of the updated status. After step 1310, the workflow progresses to step 905, Fig. 9 (step 1311).

Fig. 14 illustrates an example method by which the recipient may collect their disbursement through the website. Fig. 14 shows in greater detail what was initially described in step 113, Fig. 1. Step 1400 proceeds from step 112, Fig. 1.

In step 1401, the recipient requests collection of their disbursement from the collection page 204 from the web browser 201 running on recipient device 205.

In step 1402, the collection page 204 notifies the disbursement module 209 of the collection for this recipient, using the unique contact identifier (telephone, email address, instant messenger ID, and the like).

In step 1403, the disbursement module 209 transfers the disbursement amount from the payer account to the recipient's account. After step 1403, the workflow progresses to step 114, Fig. 1 (step 1404).

Fig. 15 illustrates an example method by which the recipient may redeem their collected disbursements from the collection page 204 running in a web browser 201 on the recipient device 205. Fig. 15 shows in greater detail what was initially described in step 114 from Fig. 1. Step 1500 proceeds from step 113, Fig. 1.

In step 1501 the recipient may choose from the redemption methods offered by the collection page 204. The specific set of available redemption methods may depend upon payer choices, applicable legal regulations, local communication infrastructure, technological and security limitations of web browsers, and local technology costs. The preferred embodiment provides as many redemption methods as is feasible to provide the maximum possible flexibility and convenience to recipients. The preferred embodiment described in Fig. 15 includes several redemption options but is not inclusive of all possibilities. Other exemplary embodiments may include, but are not limited to, redemption options such as converting into prepaid cards, codes, e-wallet value stores, loyalty rewards systems, or merchant "points" systems. Additional embodiments may see redemption for various physical or virtual services, redemption at ecommerce merchant sites, redemption into cryptocurrencies, redemption into foreign currencies, redemption into securities and derivatives, redemption into government debt or credit instruments, and the like.

In step 1502 the recipient may choose on the collection page 204 the amount of disbursement funds to redeem through an automatic teller machine (ATM) 220 and receive physical cash. In preferred embodiments, redemption through ATMs may be facilitated by banks which operate ATMs or independent ATM provider networks. In preferred embodiments, the redemption of disbursement funds may be made most convenient for recipients through the use of "cardless" ATM codes. Cardless ATM codes enable redemption at any supporting private ATM network or bank network, maximizing the number of accessible ATMs for a recipient and eliminating the need for a separate bank account. Other exemplary embodiments may use partner banks to redeem disbursement funds for cash at specific supporting bank ATMs, either with cardless codes or by requiring a qualifying ATM card. Communication between the disbursement module 209 and the ATM service providers may be coordinated by the e-Money issuance and redemption platform 210, as well as the financial infrastructure integration server 212. In the case of ATMs, a specific provider module 213 within the financial infrastructure integration server 212 may communicate with the ATM service provider.

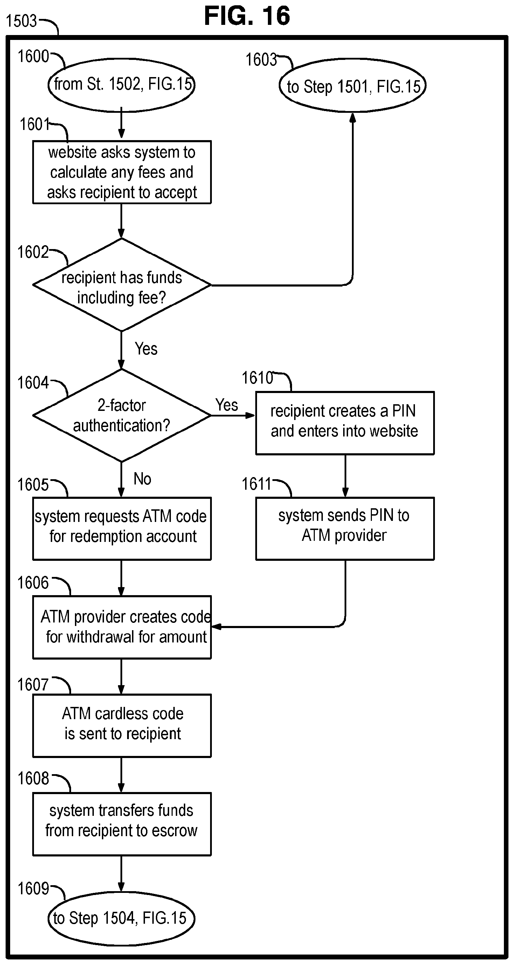

In step 1503 the disbursement module 209 may create a withdrawal code and sends it to the collection page 204 via network 207. Collection page 204 receives this redemption code and displays it to the recipient. See Fig. 16 for additional details on this step.

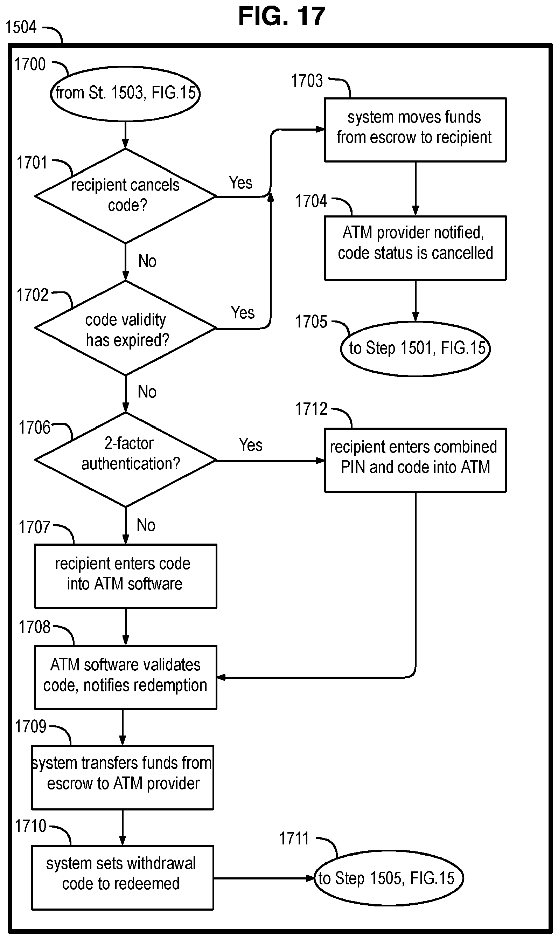

In step 1504 the recipient may navigate to the correct menu on the ATM screen and enter the redemption code into the physical ATM 220. In preferred embodiments, a PIN may be chosen by the recipient and communicated to the ATM provider through the disbursement module 209 to increase security. Other exemplary embodiments may use different forms of 2-factor authentication, or none where it is infeasible. See Fig. 17 for additional details on this step.

In step 1505 the recipient may receive the physical cash from the ATM 220 and the funds may be withdrawn from their account by the disbursement module 209. In preferred embodiments, the redemption history may be updated by the disbursement module 209 and displayed in the application 208 and the collection page 204. Other exemplary embodiments may eschew displaying redemption histories. When funds are withdrawn from the recipient's account, the e-Money issuance and redemption platform 210 may be notified by the disbursement module 209 of the redemption.

In step 1506 the disbursement module 209 may settle aggregated payments owed by the disbursement system to the ATM provider for the face value of redemption plus any fees. The e-Money issuance and redemption platform may transfer the equivalent funds from the backing funds account held at the banks and financial institutions 211 to the ATM provider using standard payment methods.

In step 1550 the disbursement module 209 may aggregate and settle redemption payments owed by the disbursement system to the ATM provider for the face value of redemption plus any fees.

Returning to step 1501, when the recipient chooses to redeem disbursement funds through a transfer to bank account 219 from the collection page 204, then the workflow proceeds to step 1510. In many countries, multiple bank transfer methods are available to banks and financial institutions 211, often varying in cost and time until final settlement. In preferred embodiments, redemption through bank transfers may be performed using the fastest yet economical bank transfer method available. Communication between the disbursement module 209 and the transfer to bank account 219 may be managed by the e-money issuance and redemption platform 210, and the financial infrastructure integration server 212. For bank transfers, a specific provider module 213 within the financial infrastructure integration server 212 may communicate with the banking system.

In step 1511, if the data is not already populated, the recipient may enter their bank account number into the collection page 204. In preferred embodiments, numerous bank account numbering schemes may be supported: sort code and account number, routing number and account number, IBAN, and other 1, 2, or multi-part account identification formats.

In step 1512 the recipient elects an amount to transfer to bank account 219 in the collection page 204.

In step 1513 the collection page 204 may send the bank transfer redemption request for the specified amount to the disbursement module 209. The disbursement module 209 may notify the e-Money issuance and redemption platform 210 to perform a redemption for the given funds. The e-Money issuance and redemption platform may send the backing funds to the specified bank account through the banks and financial institutions 211. In preferred embodiments, the e-Money issuance and redemption platform 210 may record this transaction and recognize the removal of the transferred funds from the system for accounting and recordkeeping purposes.

In step 1514 the recipient may receive their funds in the requested bank account after the settlement period for the utilized bank transfer. After this step, the workflow progresses to step 115, Fig. 1.

Returning to step 1501, when the recipient chooses to redeem disbursement funds through a retailer cash out 221 the workflow proceeds to step 1520. In preferred embodiments, the recipient may generate a unique voucher which they may present and "cash out" at a retailer 221. In preferred embodiments, multiple retailer networks may be integrated with the present invention to maximize the number of locations a recipient may utilize. The "cash out" vouchers may be unique and may comprise traditional alphanumeric text codes, or 2D or 3D codes such as barcodes, QR codes, and the like. In preferred embodiments, connected retailers have an electronic communication mechanism by which "cash out" vouchers may be requested, cancelled, or redeemed, integrated by way of a provider module 213 that runs within the financial infrastructure integration server 212. Further, in preferred embodiments, retailers may operate a system inside store locations that may read or scan a code, or allow for manual entry of a code. In preferred embodiments, said in-store system may electronically communicate with provider module 213 when vouchers are redeemed in a store. Other exemplary embodiments are feasible albeit introducing delays to either redemption or settlement.

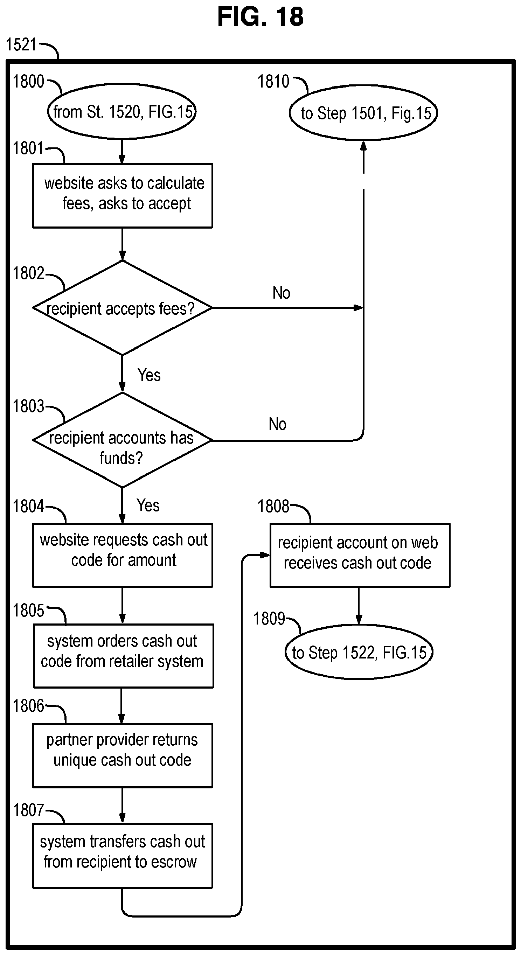

In step 1521, the recipient may use the collection page 204 to generate a unique voucher code. The request to generate a voucher may be sent to the disbursement module 209, which in turn may contact the e-money issuance and redemption platform 210, and a provider module 213 supporting the financial infrastructure integration server. Provider module 213 may be integrated with the retailer cash out 221 software system. This process is illustrated in more detail in Fig 18.

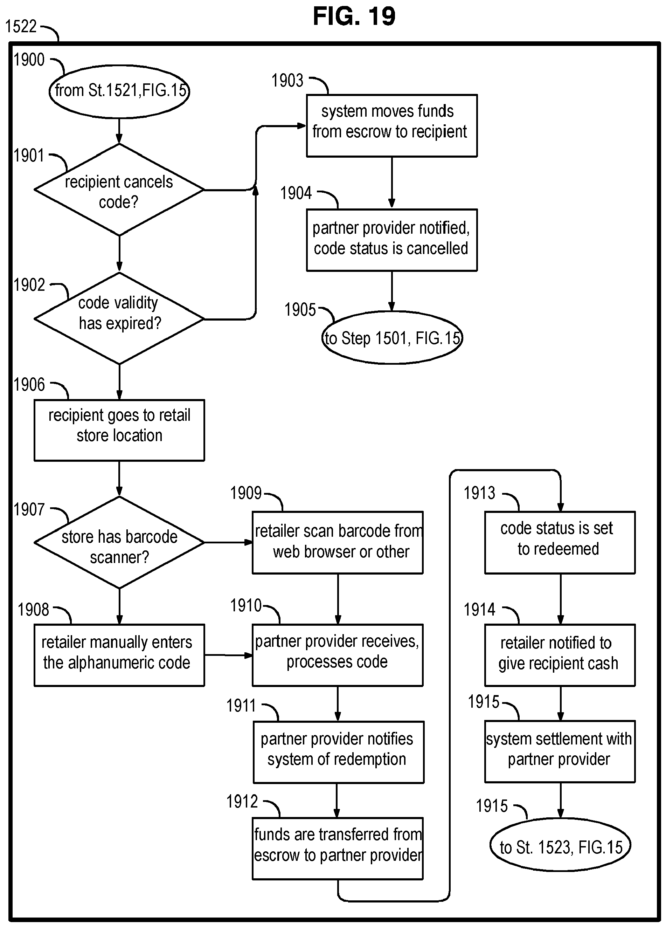

In step 1522, the recipient may present the voucher code at the retailer. The retailer may scan or enter this voucher into their system to verify the validity and cash out amount. In preferred embodiments, the retailer software system may communicate the redemption to the provider module 213 so the disbursement payment system may update the status. This process is illustrated in more detail in Fig 19.

In step 1523, the recipient receives physical money from the retailer. In preferred embodiments, the e-Money issuance and redemption platform 210 may record this transaction and recognize the removal of the transferred funds from the system for accounting and recordkeeping purposes. Next, the workflow proceeds to step 115, Fig. 1.

Returning to step 1501, when the recipient chooses on the collection page 204 to redeem disbursement funds through a telephone top-up 222 the workflow proceeds to step 1530. In preferred embodiments, telephone top-up means to add funds to a telecommunications operator account, not specifically restricted to those offering only, or primarily, telephone service. Other services offered by such an account may include, but are not restricted to, cable television, satellite television, cellular or mobile phone service, landline phone service, internet data service (wireless, DSL, cable modem, fibre optic, satellite, stratospheric wireless networks, and the like). Recipients may have telephone service through one of multiple telecommunication companies. In preferred embodiments, telephone top up redemptions may be available from multiple telecommunication operators and telephone top-up providers to provide recipients with the most choice. In preferred embodiments, connected telecommunications operators and telephone top-up providers may have an electronic communication mechanism by which telephone top-up orders may be processed. In preferred embodiments, telecommunication operators and telephone top-up providers may add funds to the specified telephone account directly. In other exemplary embodiments, the telecommunication operators and telephone top-up providers may provide a code that may subsequently be redeemed to top-up a telephone account.

In step 1531, the recipient chooses a telephone top-up 222 redemption from the collection page 204. In preferred embodiments, the collection page 204 may prompt the recipient for the telephone number to top-up, and the telecommunication operator who provides their service. In other exemplary embodiments, the recipient may enter the telecommunications account number instead when there is no specific telephone service associated with the account to top up. The request to top-up the account may be sent by the collection page 204 to the disbursement module 209.

In step 1532, the disbursement module 209 may send a request to the financial infrastructure integration server 212 to request a telephone top-up 222. The associated provider module 213 may ask the selected telephone top-up provider if the provided telephone number is valid for the given network. If the telephone number is valid, the provider module 213 may determine any redemption fees and requests the disbursement module 209 to acknowledge the order. The disbursement module 209 in turn may send the fee verification request to the collection page 204 for the recipient to acknowledge. In the preferred embodiment for web-based collection, the recipient may be presented with the confirmation request of the fee and order in the collection page 204. If the recipient consents to the fee, collection page 204 may send the acknowledgement to the disbursement module 209, which in turn sends confirmation to the provider module 213. The provider module 213 may send confirmation of the telephone top-up 222 order to the telecommunications operator or telephone top-up provider system.

In step 1533, the telecommunications operator or telephone top-up provider system has received the order for a telephone top-up amount for a specific telephone number or account. This request is honored and funds may be applied to the target telephone number or account. In preferred embodiments, the telecommunications operator or telephone top-up provider system may notify the provider module 213 with the success of the order.

In step 1534, the provider module 213 receives notification of the successful order. Provide module 213 may notify the e-Money issuance and redemption platform 210 which in turn notifies the disbursement module 209 to transfer funds from the recipient's account to the telecommunications operator or telephone top-up provider. The recipient may also be notified of the successful transaction in the collection page 204.

In step 1535, the e-Money issuance and redemption platform 210 may send funds to the telecommunications operator or telephone top-up provider bank account through banks and financial institutions 211. In preferred embodiments, the e-Money issuance and redemption platform 210 may then record this transaction and recognize the removal of the transferred funds from the system for accounting and recordkeeping purposes. After this step, the workflow progresses to step 115, Fig. 1.

Returning to step 1501, when the recipient chooses to redeem disbursement funds by sending a Peer to Peer (P2P) transfer 223 the workflow proceeds to step 1540. In preferred embodiments, P2P transfer means the recipient may send funds to another account using the payment system as the present invention. In the context of Fig. 15 the P2P transfer may be sent by the recipient to another account through the collection page 204. In preferred embodiments, the recipient account must have already been registered, but does not require the recipient to have installed their own copy of the application 208 on recipient device 205 for the recipient to send a P2P transfer.

In step 1541 the recipient submits to the collection page 204 the amount and the username of the account they wish to send funds to through a P2P transfer 223. The collection page 204 may send the transfer notice to the disbursement module 209. In preferred embodiments, the disbursement module 209 may validate that the P2P recipient username has been created and of there are sufficient funds in the recipient's account to send the requested amount. In other exemplary embodiments, validation may instead be performed in the collection page 204, or at a central or decentralized validation authority.

In step 1542 the disbursement module 209 may send notice to the recipient account that funds are available for receipt. In preferred embodiments, the P2P recipient may be notified through whatever application notification settings they have enabled (SMS, email, in-application notice, and the like).

In step 1543 the disbursement module 209 may accept the transfer of funds to the recipient. In preferred embodiments, such acceptance may be automatic. In other exemplary embodiments, the acceptance of funds may require the P2P recipient to accept through the application or in response to the notification message from step 1542.

In step 1544 the disbursement module 209 may transfer the funds from the recipient's account into the P2P recipient's account over network 207. In preferred embodiments, both recipient and P2P recipient may be informed of the completed transfer and each receive a transaction record. In other exemplary embodiments, step 1544 may occur simultaneously with the initial validity check, in conjunction with a temporary holding or escrow account. In preferred embodiments, the e-Money issuance and redemption platform 210 may record this transaction and recognize the removal of the transferred funds from the system for accounting and recordkeeping purposes. After step 1544, the workflow progresses to step 115, Fig. 1.

Fig. 16 illustrates an example method by which the recipient may receive a cardless ATM withdrawal code via a web browser. Fig. 16 shows in greater detail what was initially described in step 1503 from Fig. 15. Step 1600 proceeds from step 1502, Fig. 15 where the recipient has chosen to redeem via an ATM 220.

In step 1601, the disbursement module 209 may calculate any fees applicable to ATM redemption 220, and requests confirmation via the collection page 204. The confirmation request may be presented to the recipient in the collection page 204.

In step 1602 if the recipient does not have sufficient funds or does not accept the fees the workflow proceeds to step 1603, returning to where the recipient chooses a redemption method in step 1501, Fig. 15. In the event the recipient accepts the fees, the workflow proceeds to step 1604.

Step 1604 is a conditional path depending on the embodiment implementing 2-factor authentication. In the preferred embodiment 2-factor authentication may be implemented and the workflow proceeds to step 1610. 2-factor authentication adds extra security, requiring the user to have access to multiple accounts or prove access to a device.

In step 1610, the recipient creates a PIN for this redemption transaction by entering the PIN into the collection page 204. The PIN may be transmitted from the collection page 204 to the disbursement module 209, which in turn sends the data to the financial infrastructure integration server 212 and provider module 213.

In step 1611, the provider module 213 requests an ATM withdrawal code from the ATM provider software over the network 207. This request includes the PIN information and may be made using an API or other agreed-upon communication protocol. The ATM provider may later validate the cash out request at the ATM 220 with this PIN. The workflow proceeds then to step 1606.

Returning to step 1604, in exemplary embodiments which do not use 2-factor authentication, the workflow proceeds directly step 1605. In step 1605, the collection page 204 requests an ATM withdrawal code from the disbursement module 209, which in turn requests the code from to the financial infrastructure integration server 212 and provider module 213. The provider module 213 requests an ATM withdrawal code from the ATM provider software over the network 207 using an API or agreed-upon communication protocol.

In step 1606, the ATM provider system generates a withdrawal code for the specified amount.

In step 1607, the ATM provider system sends the withdrawal code to the provider module 213 over the network 207, which in turn sends the code through the financial infrastructure integration server 212 to the disbursement module 209 over network 207. The disbursement module 209 sends the code to the recipient contact method (SMS, email, instant messenger and the like).

In preferred embodiments, in step 1608, the disbursement module 209 transfers funds from the recipient account into an escrow account. Other exemplary embodiments may eschew the escrow account, but this may make code cancellation and any refund process more complicated. After step 1608, the workflow progresses to step 1504, Fig. 15 (step 1609).

Fig. 17 illustrates an example method by which the recipient may redeem collected disbursement funds by entering their cardless ATM withdrawal code into the ATM 220. Fig. 17 shows in greater detail what was initially described in step 1504, Fig. 15. Step 1700 proceeds from step 1503, Fig. 15 where the recipient requested from the collection page 204 a redemption by ATM 220 and has already received a withdrawal code. In preferred embodiments, the recipient has also submitted a PIN for additional security.

Step 1701 is the conditional whereby the recipient may cancel their withdrawal code at any point up until actual redemption. If the recipient cancels their code, the workflow proceeds to step 1703.

In step 1703, the code has been cancelled, has expired, or is otherwise no longer valid. In the case of recipient-initiated cancellation, the collection page 204 running in a web browser 201 on recipient device 205 notifies the disbursement module 209 of the cancellation request. In the case of expiration, the disbursement module 209 recognizes that the expiration of a code has passed. Other exemplary embodiments may check for code expiry in various software components or via manual processes. The disbursement module 209 moves funds from the escrow account back into the recipient's account.

In step 1704, the disbursement module 209 sends a cancellation request or expiry notice to the financial infrastructure integration server 212 and provider module 213. The provider module 213 then sends a cancellation request or expiry notice to the ATM provider software system, using an API or another agreed-upon protocol. The workflow then proceeds to step 1501, Fig. 15 (step 1705), where the recipient is presented with redemption options.

Returning to step 1701, in the event the recipient does not wish to cancel their withdrawal code, the workflow proceeds to step 1702. Step 1702 is a conditional which checks if a code has expired or is otherwise invalid, in which case the workflow proceeds to step 1703 and code invalidation. In the event the code has not expired and is valid the workflow proceeds to step 1706.

Step 1706 is a conditional based upon whether the embodiment used 2-factor authentication in step 1503, Fig. 15 (also steps 1610, 1611, Fig. 16) where the recipient chose a PIN for additional security. If the embodiment utilized a PIN then the workflow proceeds to step 1712.

In step 1712, the recipient enters the same PIN they previously submitted into the ATM. The ATM provider has already received this PIN and may check that it matches.

Returning to step 1706, in the event a 2-factor authentication was not used in the exemplary embodiment, the workflow instead proceeds to step 1707.

In step 1707, the recipient enters the withdrawal code they received into the ATM.

In step 1708, the ATM validates the entered withdrawal code, and if utilized, the entered PIN. If all required codes are valid the ATM may authorize issuance of the specified amount to the recipient. The ATM provider then software notifies the provider module 213 of the redemption at the ATM.

In step 1709, the provider module 213 notifies the disbursement module 209 through the financial infrastructure integration server 212 of the redemption at an ATM. The disbursement module 209 transfers the withdrawal amount plus fees from the escrow account into the ATM provider account.

In step 1710, the disbursement module 209 updates the withdrawal code status within the system to "redeemed" and notifies collection page 204 of the updated status. After step 1710, the workflow progresses to step 1505, Fig. 15.

Fig. 18 illustrates an example method by which the recipient may receive a retailer "cash out" voucher in the collection page 204. Fig. 18 shows in greater detail what was initially described in step 1521, Fig. 15. Step 1800 proceeds from step 1520, Fig. 15. The recipient has requested a redemption via retailer cash out 221 in the collection page 204, and the workflow proceeds to step 1801.

In step 1801 the disbursement module 209 calculates any fees applicable to retailer cash out 221, and requests confirmation via the collection page 204. The confirmation request may be presented to the recipient in the collection page 204.

In step 1802 if the recipient does not accept the fees the workflow proceeds to step 1810, returning to where the recipient chooses a redemption method in step 1501, Fig. 15. In the event the recipient accepts the fees, the workflow proceeds to step 1803.

In the exemplary embodiment, in step 1803 the disbursement module 209 validates that the user has sufficient funds available to send the proposed amount plus fees. If the recipient does not have sufficient funds in their account the workflow proceeds to step 1810, returning to where the recipient chooses a redemption method in step 1501, Fig. 15. In the event the recipient does have sufficient funds then the workflow proceeds to step 1804. In the other exemplary embodiments, the validation of sufficient funds may occur in the collection page 204.

In step 1804 the collection page 204 sends a request for a cash out code to the disbursement module 209. The disbursement module 209 in sends the request to the financial infrastructure integration server 212. The financial infrastructure integration server 212 sends this request to a provider module 213 that it hosts which may be capable of executing a retailer cash out 221.

In step 1805 the provider module 213 communicates with the external retailer cash out system 221 over network 207. Provider module 213 requests a cash out voucher code for the specified amount from the retailer system. In preferred embodiments, this communication may be electronic and automated by software. Other exemplary embodiments could include manual processes or communication.

In step 1806 the retailer cash out system 221 responds to the provider module 213 with a cash out voucher code. The code is provided by the financial infrastructure integration server 212 to the disbursement module 209.

In preferred embodiments, in step 1807 the disbursement module 209 transfers the cash out voucher amount plus any fees from the recipient's account into an escrow account. In the event a retailer cash code expires or is cancelled, the use of an escrow account makes the process of rescinding codes simpler. Other exemplary embodiments may eschew the escrow account and directly transfer the funds to the retailer.

In step 1808 the cash out voucher code is communicated by the disbursement module 209 to the collection page 204, for display in the web browser 201 on user device 205. The web browser 201 on which collection page 204 is shown may store this code for later display. After step 1808, the workflow progresses to step 1522, Fig. 15 (step 1809).

Fig. 19 illustrates an example method by which the recipient may present a cash out voucher code at the retailer. Fig. 19 shows in greater detail what was initially described in step 1522, Fig. 15. Step 1900 proceeds from step 1521, Fig. 15. The recipient currently has a cash out voucher code worth a specified face value amount stored in their collection page 204, and the workflow proceeds to step 1901.

In preferred embodiments, in step 1901 the recipient has the choice of cancelling the retailer cash out voucher 221 from the collection page 204 and receiving a refund for the voucher amount to their account. If the recipient chooses to cancel their code the workflow proceeds to step 1903. In this event, the recipient makes the cancellation request through the collection page 205. In other exemplary embodiments, the recipient could also cancel through a customer support request. The collection page 204 sends the cancellation request to the disbursement module 209. Other exemplary embodiments may eschew the ability to cancel codes, at a commensurate loss of convenience for the recipient.

In step 1903 the cash out voucher code may be cancelled due to recipient request or voucher code expiration. In the preferred embodiment the disbursement module 209 transfers funds from the escrow account back into the recipient's account. In other exemplary embodiments which did not use an escrow account this step is skipped.

In step 1904 the external retailer system is notified of the cash out voucher cancellation. The disbursement module 209 sends this cancellation notice to the financial infrastructure integration server 212 which in turn sends the notice to the provider module 213. The provider module 213 notifies the external retailer system over the network 207, providing the voucher identifier and all other information required for cancellation. Additionally, the disbursement module 209 sets the code status to cancelled internally, and notifies the collection page 204 of the confirmed cancellation. After such a cancellation, the workflow returns to where the recipient may choose a redemption method in step 1501, Fig. 15.

Returning to step 1901, in the event the user does not wish to cancel their cash out voucher code the workflow progresses to step 1902.

In step 1902 the disbursement module 209 periodically check if the voucher has expired. If the cash out voucher code has expired, the disbursement module 209 proceeds to cancel the cash out voucher and proceed to step 1903. In the event the code is still valid and unexpired, the workflow progresses to step 1906.

In the preferred embodiment cash out vouchers may expire after a specified amount of time or after a fixed date or time. Upon expiry, the funds associated with forgotten or otherwise unused vouchers are refunded to the recipient's account. Other exemplary embodiments may use unexpiring or very long-dated expiries for cash out vouchers.

In step 1906 the recipient has a valid unexpired cash out voucher code that they wish to redeem at a retailer. In preferred embodiments, in order to redeem their code, the recipient goes to a participating retail store location. In other exemplary embodiments, the recipient may be able to submit redemption requests electronically or by other remote methods and receive physical cash by courier or other delivery methods.

Step 1907 occurs at the retailer. If the retailer store has a compatible barcode scanner, Optical Character Recognition (OCR) or similar reader the workflow progresses to step 1909. Such readers may be capable of scanning a cash out voucher code presented by the collection page 204 running in a web browser 201 or as a screenshot of the collection page 204 on a display screen used by a display device 2205 associated with recipient device 205. In other exemplary embodiments, the recipient could a printout of the cash out voucher code to be scanned.

In step 1909 the retailer scans the barcode from the display or printout using the scanning device. This scanning device may be connected to the retailer's software system which processes the scanned cash out voucher code. The retailer software system may be owned and managed by the retailer directly, or communicates with one or more additional software systems owned and managed by code providers and system integrators.

In preferred embodiments, in step 1910 the retailer's software system transmits the scanned code from the reader machine to a cash out voucher code management system. Said retailer software system may process and validate the scanned code.

In step 1911, the retailer's software system notifies the provider module 213 in the financial infrastructure integration server 212 of the successful scan of the code. The financial infrastructure integration server 212 in turn notifies the disbursement module 209. Other exemplary embodiments may at this point immediately pay the recipient prior to waiting for fund transfers. In such embodiments, the workflow would skip steps 1912-1914 and proceed immediately step 1915.

In step 1912, in preferred embodiments, the disbursement module 209 moves funds from the escrow account to the retailer partner account.

In step 1913, the disbursement module 209 updates the code status to "redeemed". The disbursement module 209 notifies the collection page 204 to update the cash out voucher code to redeemed.

In step 1914, in preferred embodiments, the disbursement module 209 notifies financial infrastructure integration server 212 of the fund transfer. The financial infrastructure integration server 212 in turn notifies the provider module 213 of transfer. The provider module 213 notifies the external retailer software system that funds have been transferred and the recipient is eligible to receive physical money at the retailer location.

In step 1915, the disbursement module 209 notifies the e-Money issuance and redemption platform 210 that the external retailer is to receive payment for the redemption service and transfer funds from the backing bank account held at banks and financial institutions 211. After step 1915, the workflow progresses to step 1523, Fig. 15 (step 1916).

Returning to step 1907, in the event the retailer location does not have a compatible scanner (or in the event the scanner is not operating correctly) the workflow proceeds to step 1908.

In step 1908, the retailer manually enters the code displayed on the recipient's device 205 into the retailer's software system. After manual entry is complete the workflow proceeds to step 1910.

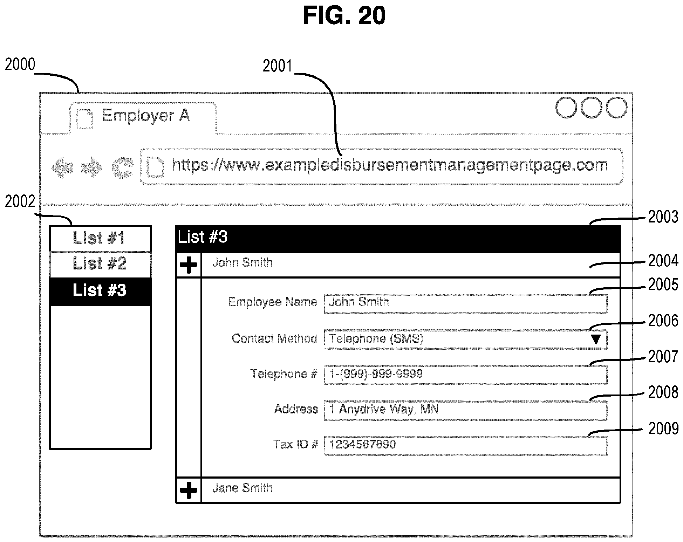

Fig. 20 illustrates an example embodiment of a disbursement management page 203, Fig. 2. This web page functions as User Interface from which payers may manage disbursements to one or more recipients. In preferred embodiments, the disbursement management page 203, Fig. 2 is implemented as a web page, hosted on a web server 202, Fig. 2, but other embodiments may see this component implemented as a software application instead.

The populated data presented in Fig. 20 is for demonstration purposes only, and may be in such a state at various times in the workflow from Fig. 1. For the remainder of this description of Fig. 20, the data populated by this example assumes that the payer has created 3 recipient disbursement lists ("List #1", "List #2", "List #3"). Additionally, in this example, "List #3" contains disbursements for 2 recipients ("John Smith" and "Jane Smith") that have not yet been enabled for collection. Further, in this example "John Smith" has already registered an account and has submitted his personal information (address and tax ID #) which is now visible to the payer.

Element 2000 represents the disbursement management page 203, Fig. 2 running in a web browser 201, Fig. 2 on the payer's device 200, Fig. 2. Payers may access this web page by logging into their account via a web page at a dedicated URL 2001.

Element 2002 represents the preferred embodiment supports multiple disbursements lists. Each list may contain 1 or more recipients. Specific recipients may receive one or more disbursements on multiple lists.

Element 2003 demonstrates an example embodiment in which List #3 has been selected by the payer. In preferred embodiments, multiple lists may be selected at the same time, such that actions may affect all contained data or recipients at the same time.

Element 2004 demonstrates a button that would enable disbursements to all recipients in the current list.

Element 2006 demonstrates an expanded view of one of the recipient's disbursement details. In this example, the payer may enable (or disable) disbursements for this specific recipient by flagging the user or by means of a button 2005.

Element 2007 shows the amount to disburse to the currently selected recipient. In order to prevent fraud and typographical errors the preferred embodiment may require additional permissions and authentication on behalf of the payer should the entered disbursement amount exceed a configurable limit. Other exemplary embodiments may forego such limits.

Element 2005 is the recipient name, which is submitted by the payer, along with the contact method 2006, and the recipient contact information, such as the telephone number 2007 or the address 2008. The recipient may also provide the tax identifier 2009.

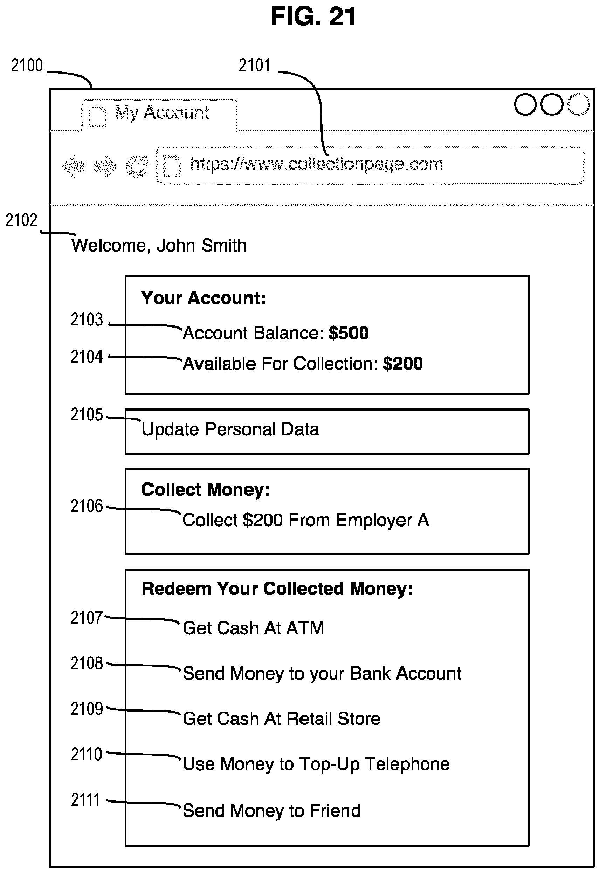

Fig. 21 illustrates an example embodiment of collection page 204, Fig. 2. This web page functions as a User Interface from which recipients may create and register an account, submit their personal data, view their account balance and transaction history, and collect and initiate redemption of available disbursements. In preferred embodiments, said functions may be split between the collection page and the application, but in other exemplary embodiments said functions could be entirely provided by either the web page or a software application. The example web page Fig. 21 should be viewed as an example of the web based recipient collection and redemption process, which could occur in conjunction with, on in lieu of application-based collection and redemptions. The populated data demonstrated in Fig. 21 is for example purposes only, and could be in this state at various times in the workflow from Fig. 1 or Fig. 15-16. For the remainder of this description of Fig. 21, the example may assume the recipient has previously received one or more disbursement notices (step 101, Fig. 1), have authenticated themselves (step 102, Fig. 1) on the collection page (step 204, Fig. 2), they have registered an account and entered their personal data into the system (step 112, Fig. 1). Further, the recipient has already collected a number of disbursements (step 113, Fig. 1) and still has a number of uncollected disbursements. For the remainder of the example, the recipient view of Fig. 21 may be considered to as immediately prior to step 113, Fig. 1 or step 114, Fig. 1 ready to collect or redeem disbursement funds

Element 2100 represents the collection page 204 running in a web browser 201 on the recipient's device 205. In preferred embodiments, recipient's may access the collection page 204 by typing in the URL into the location bar 2101 of the web browser 201 or by using the links provided in a disbursement notification, via an embedded browser in the application, or directly through the application.

Element 2102 illustrates that in preferred embodiments, the example collection page 204, Fig. 2 URL is unique for each recipient working for a payer. To access this page the recipient must have entered their security code and in the preferred embodiment have passed a 2-factor authentication challenge. In preferred embodiments, the payer may have multiple disbursements which may be collected and redeemed on one collection page 204, Fig. 2. Other exemplary embodiments may use a different URL for each disbursement to each recipient, and may do not require 2-factor authentication.

Element 2103 illustrates the aggregated disbursements that the recipient has currently collected. In other exemplary embodiments the notification, collection, and redemption history could be accessed from this link as well.

Element 2104 illustrates the current aggregate amount of uncollected disbursements that the recipient has available. These are disbursements that the payer has enabled and made available to this recipient. In other exemplary embodiments, an itemized list of specific disbursements amounts dates, and like information may also be accessed.

Element 2105 illustrates the method by which the recipient would submit all of required personal information. In the preferred embodiment clicking on element 2105 would show a data entry form with all required payer fields. By way of example, if the recipient in Fig. 21 is the same person as in the example Fig. 20, the recipient would submit their home address 2011 and tax ID # 2012. The process of submitting data through element 2105 provides said information to the payer (who requires the data for accounting, taxation, and other legal reasons).

Element 2106 illustrates the method by which the recipient would initiate the collection of available disbursements 2104 enabled by this payer, as described in step 113, Fig. 1 and in further detail in Fig. 14.

Element 2107 illustrates an example method by which the recipient would redeem collected disbursements by receiving money at an ATM. This method is described in step 115, Fig 1, and in further detail in steps 1502-1506 Fig. 15, Fig. 16, and Fig. 17.

Element 2108 illustrates an example method by which the recipient would redeem collected disbursements by transferring funds into a bank account. This method is described in step 115, Fig. 1, and in further detail in steps 1510-1514 Fig. 15.

Element 2109 illustrates an example method by which the recipient would redeem collected disbursements by receiving money at a retail store. This method is described in step 115, Fig. 1, and in further detail in steps 1520-1523 Fig. 15, Fig. 18, and Fig. 19.

Element 2110 illustrates an example method by which the recipient would redeem collected disbursements by transferring funds to a telecommunication provider account, commonly known as a "telephone top-up". This method is described in step 115, Fig 1, and in further detail in steps 1530-1534, Fig. 15.

Element 2111 illustrates an example method by which the recipient would redeem collected disbursements by transferring funds to a friend or contact in a peer to peer transaction. This method is described in step 115, Fig 1, and in further detail in steps 1540-1544, Fig. 15.

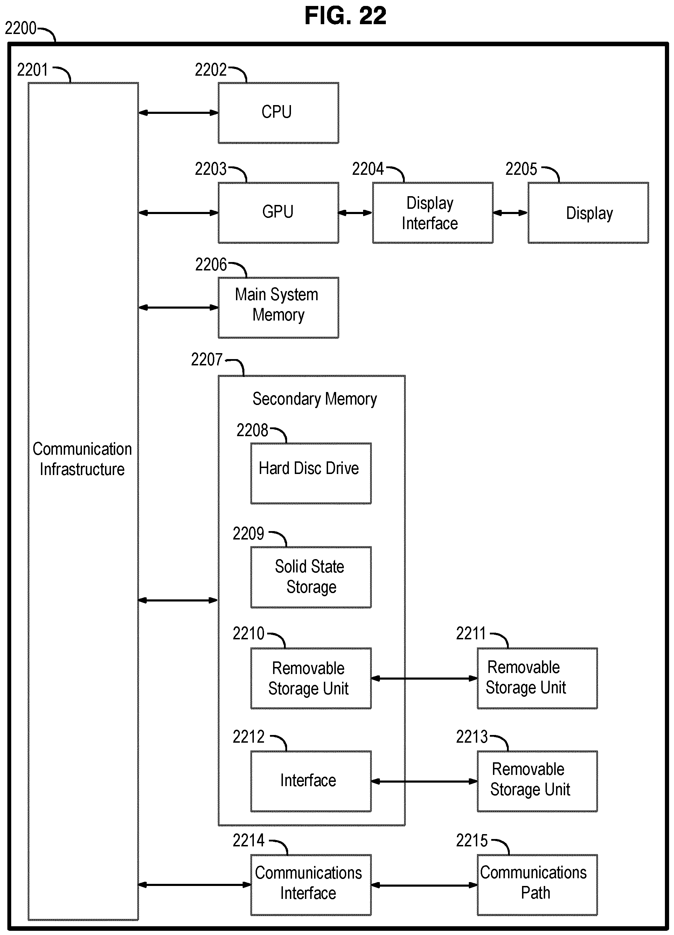

Fig. 22 illustrates an example computer system 2200 in which embodiments of the present disclosure, or portions thereof, may be implemented as computer-readable code. For example, the payer device 200, recipient device 205, web server 202, the host processing systems for disbursement module 209, e-Money issuance and redemption platform 210, financial integration server 212, and external financial systems 214 of Fig. 2 may be implemented in the computer system 2200 using hardware, software, firmware, non-transitory computer readable media having instructions stored thereon, or a combination thereof and may be implemented in one or more computer systems or other processing systems. Hardware, software, or any combination thereof may embody modules and components used to implement the methods of Figs 4 through 21 (inclusive).

If programmable logic is used, such logic may execute on a commercially available processing platform or a special purpose device. A person having ordinary skill in the art may appreciate that embodiments of the disclosed subject matter may be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above described embodiments.

A processor device as discussed herein may be a single processor, a plurality of processors, or combinations thereof. Processor devices may have one or more processor "cores." The terms "computer program medium," "non-transitory computer readable medium," and "computer usable medium" as discussed herein are used to generally refer to tangible media such as a removable storage unit 2210, a removable storage unit 2211, and a hard disk installed in hard disk drive 2208 or solid-state storage device 2209.

Various embodiments of the present disclosure are described in terms of this example computer system 2200. After reading this description, it may become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

Central processing unit 2202 may be a special purpose or a general-purpose processor device. The central processing unit 2202 may be connected to a communication infrastructure 2201, such as a bus, message queue, network (e.g., the network 207), multi-core message-passing scheme, etc. The computer system 2200 may also include a main memory 2206 (e.g., random access memory, read-only memory, etc.), and may also include a secondary memory 2207. The secondary memory 2207 may include the hard disk drive 2208, solid state memory 2209 and a removable storage drive 2210, such as a floppy disk drive, a magnetic tape drive, an optical disk drive, a flash memory, etc.

The removable storage drive 2210 may read from and/or write to the removable storage unit 2211 in a well-known manner. The removable storage unit 2211 may include a removable storage media that may be read by and written to by the removable storage drive 2210. For example, if the removable storage drive 2210 is a floppy disk drive, the removable storage unit 2211 may be a floppy disk. In one embodiment, the removable storage unit 2211 may be non-transitory computer readable recording media.

In some embodiments, the secondary memory 2207 may include alternative means for allowing computer programs or other instructions to be loaded into the computer system 2200, for example, the removable storage unit 2213 and an interface 2212. Examples of such means may include a program cartridge and cartridge interface (e.g., as found in video game systems), a removable memory chip (e.g., EEPROM, PROM, etc.) and associated socket, and other removable storage units 2213 and interfaces 2211 as may be apparent to persons having skill in the relevant art.

Computer program medium and computer usable medium may refer to memories, such as the main memory 2206 and secondary memory 2207, which may be memory semiconductors (e.g. DRAMs, etc.). These computer program products may be means for providing software to the computer system 2200. Computer programs (e.g., computer control logic) may be stored in the main memory 2206 and/or the secondary memory 2207. Computer programs may also be received via the communications interface 2214. Such computer programs, when executed, may enable computer system 2200 to implement the present methods as discussed herein. In particular, the computer programs, when executed, may enable central processing unit 2202 to implement the methods illustrated by Figs, 3 through 21 (inclusive), as discussed herein. Accordingly, such computer programs may represent controllers of the computer system 2200. Where the present disclosure is implemented using software, the software may be stored in a computer program product and loaded into the computer system 2200 using the removable storage drive 2210, interface 2212, and hard disk drive 2208, solid state storage 2209, or communications interface 2214.

The computer system 2200 may also include a communications interface 2214. The communications interface 2214 may be configured to allow software and data to be transferred between the computer system 2200 and external devices. Exemplary communications interfaces 2214 may include a modem, a network interface (e.g., an Ethernet card), a communications port, a PCMCIA slot and card, etc. Software and data transferred via the communications interface 2214 may be in the form of signals, which may be electronic, electromagnetic, optical, or other signals as will be apparent to persons having skill in the relevant art. The signals may travel via a communications path 2215, which may be configured to carry the signals and may be implemented using wire, cable, fiber optics, a phone line, a cellular phone link, a radio frequency link, etc.

While the present invention has been described in terms of particular embodiments and applications, in both summarized and detailed forms, it is not intended that these descriptions in any way limit its scope to any such embodiments and applications, and it will be understood that many substitutions, changes and variations in the described embodiments, applications and details of the method and system illustrated herein and of their operation may be made by those skilled in the art without departing from the spirit of this invention.

## Claims

1. A method of a payer disbursing electronic remuneration payouts to recipients, comprising the steps of:
- receiving (100), from a payer device (200), disbursement data comprising a recipient disbursement amount and recipient contact information including a contact method and a contact point, at a disbursement management module;
- receiving (100), at the disbursement management module (209), a request from the payer to enable a set of disbursements as available disbursements;
- transmitting (101) a notification of the available disbursement to the recipient contact point according to the contact method specified for the available disbursement;
- receiving (102), from the recipient device (205), of all required personal data; and
- enabling (115) the recipient to collect the available disbursement through the recipient device (205).

2. The method of claim 1, further comprising enabling (115) the user for redemption, through automated or electronic methods running in an application or a website on the recipient device, of the collected disbursements and convert the collected disbursements into physical cash, transfers, or bank deposits.

3. The method of any of previous claims, further comprising automated reporting of personal data submitted by the recipient through the recipient device to the payer management module in order to comply with legal requirements.

4. The method of any of previous claims, further comprising enabling for the recipient an on-demand automated electronic collection of disbursement through an electronic request mechanism.

5. The method of claim 1, further comprising enabling for the recipient an on-demand redemption of funds and conversion into physical cash, transfers, or bank deposits through electronic methods.

6. The method of claim 5, further compromising enabling for the recipient a redemption of collected disbursements through ATM networks.

7. The method of claim 5, further compromising enabling for the recipient a redemption of collected disbursements through bank transfers.

8. The method of claim 5, further compromising enabling for the recipient a redemption of collected disbursements through retailer cash out codes.

9. The method of claim 5, further compromising enabling for the recipient a redemption of collected disbursements through telecommunications account "top-up".

10. The method of claim 5, further compromising enabling for the recipient a redemption of collected disbursements through Peer-To-Peer transfer.

11. A computer system (2200) comprising:
- at least one nontransitory processor-readable storage medium that stores at least one of processor-executable instructions or data; and
- at least one processor communicably coupled to the at least one nontransitory processor-readable storage medium, wherein the at least one processor is configured to perform the steps of the method of any of the previous claims.

12. A computer program product comprising instructions which, when executed on a computer, cause the computer to perform the steps of the method of any of steps 1-10.
